# EUROPEAN PATENT APPLICATION

(11) **EP 4 485 642 A1**
(43) Date of publication of application: **01.01.2025**
(21) Application number: 23803020.9
(22) Date of filing: 11.05.2023
(51) Int. Cl.: H01M 50/172, H01M 50/184, H01M 50/533, H01M 50/552, H01M 50/562, H01M 50/593

(54) **BATTERY, BATTERY PACK, AND VEHICLE**

(30) Priority: 12.05.2022 CN 202210515990; 10.11.2022 CN 202222993656 U
(71) Applicant: BYD Company Limited, Shenzhen, Guangdong 518118 (CN)
(72) Inventor: YUAN, Wansong, Shenzhen, Guangdong 518118 (CN); WANG, Xinyue, Shenzhen, Guangdong 518118 (CN); DENG, Dongjun, Shenzhen, Guangdong 518118 (CN); CHEN, Chong, Shenzhen, Guangdong 518118 (CN)
(74) Representative: Wu, Ting
(86) International application number: PCT/CN2023/093670
(87) International publication number: WO 2023/217251

(57) **Abstract**

A battery (100), a battery pack (1000), and a vehicle (10000). The battery (100) comprises: a battery housing (110); an electrode core (120), lead-out sheets (141, 142) and conductive posts (131, 132). The electrode core (120) and the lead-out sheets (141, 142) are all arranged in the battery housing (110); the lead-out sheets (141, 142) are connnected to the electrode core (120); the conductive posts (131, 132) pass through the battery housing (110) so that the conductive posts (131, 132) are connected to the lead-out sheets (141, 142), wherein the relationship between the cross-sectional area s_{lead} of the lead-out sheets (141, 142) and the capability C of the battery (100) is C/S_{lead}≤15, the unit of s_{lead} is mm², and the unit of C is Ah.

## Description

### CROSS-REFERENCE TO RELATED APPLICATIONS

The present disclosure claims priority to and benefits of Chinese Patent Application No. 202210515990.7, filed on May 12, 2022 and entitled "BATTERY, BATTERY PACK, AND VEHICLE", and to Chinese Patent Application No. 202222993656.0, filed on November 10, 2022 and entitled "BATTERY, BATTERY PACK, AND VEHICLE". The entire content of the above-referenced applications is incorporated herein by reference.

### FIELD

The present disclosure relates to the field of battery technologies, and specifically to a battery, a battery pack, and a vehicle.

### BACKGROUND

In a battery in the related art, a lead-out sheet is arranged in a battery housing and is connected between a tab of an electrode core and a conductive post, so that a current flows inside and outside the battery. However, in the related art, a lead-out sheet has a single size. Either a cross-sectional area of the lead-out sheet is too large, resulting in a waste of resources, or a cross-sectional area of the lead-out sheet is too small, resulting in a heating problem, and further causing a thermal security problem of the battery.

### SUMMARY

The present disclosure aims to resolve at least one of the technical problems existing in the related art. Therefore, an objective of the present disclosure is to provide a battery with a strong current carrying capability, to ensure that during use, a temperature does not rise excessively due to a small current carrying area, and does not exceed an operating temperature range of the battery, to avoid a thermal security problem of the battery.

The present disclosure further provides a battery pack having the battery described above.

The present disclosure further provides a vehicle having the battery pack described above.

The battery according to the present disclosure includes a battery housing, an electrode core, lead-out sheets, and conductive posts. The electrode core and the lead-out sheets are all arranged in the battery housing, the lead-out sheets are connected to the electrode core, and the conductive posts pass through the battery housing, so that the conductive posts are connected to the lead-out sheets. A relationship between a cross-sectional area s_{lead} of the lead-out sheets and a capacity C of the battery is C/s_{lead}≤15. A unit of s_{lead} is mm², and a unit of C is Ah.

According to the battery of the present disclosure, the relationship between the cross-sectional area s_{lead} of the lead-out sheets and the capacity C of the battery is configured as C/s_{lead}≤8. This ensures a current carrying capability of the lead-out sheet, and ensures that a temperature of the lead-out sheet does not rise excessively due to a small current carrying area during use of the battery, so that internal temperature distribution of the battery is not affected, an internal temperature in the battery does not exceed an operating temperature range of the battery, and a thermal security problem of the battery is not caused.

Optionally, the relationship between the cross-sectional area s_{lead} of the lead-out sheets and the capacity C of the battery is 2≤C/s_{lead}≤15.

Optionally, the relationship between the cross-sectional area s_{lead} of the lead-out sheets and the capacity C of the battery is 2≤C/s_{lead}≤15.

Optionally, the lead-out sheets include a positive lead-out sheet and a negative lead-out sheet. The conductive posts include a positive conductive post and a negative conductive post. The positive lead-out sheet passes through the battery housing and is connected to the positive conductive post, and the negative lead-out sheet passes through the battery housing and is connected to the negative conductive post. A relationship between a cross-sectional area s_{positive lead} of the positive lead-out sheet and the capacity C of the battery is 5≤C/s_{positive lead}≤12, and a relationship between a cross-sectional area s_{negative lead} of the negative lead-out sheet and the capacity C of the battery is 6≤C/s_{negative lead}≤15. A cross section of the positive lead-out sheet and a cross section of the negative lead-out sheet each are a surface orthogonal to a current flow direction, units of s_{positive lead} and s_{negative lead} are mm², and a unit of C is Ah.

Optionally, the cross-sectional area of the positive lead-out sheet ranges from 14 mm² to 150 mm², the cross-sectional area of the negative lead-out sheet ranges from 10 mm² to 130 mm², and the capacity C of the battery ranges from 30 Ah to 400 Ah.

Optionally, the positive lead-out sheet is an aluminum sheet, and the negative lead-out sheet is a copper sheet.

Optionally, the positive lead-out sheet and the negative lead-out sheet each include a first connection sheet and a second connection sheet that are connected. The second connection sheet of the positive lead-out sheet is connected to a positive tab of the electrode core, the first connection sheet of the positive lead-out sheet is connected to the positive conductive post, the second connection sheet of the negative lead-out sheet is connected to a negative tab of the electrode core, and the first connection sheet of the negative lead-out sheet is connected to the negative conductive post.

Optionally, a size of the first connection sheet in a length direction of the battery ranges from 0.8 mm to 2 mm.

Optionally, a size of the first connection sheet in the length direction of the battery ranges from 0.6 mm to 2 mm.

Optionally, the battery housing includes a first plate piece and a second plate piece that are opposite to each other in the length direction of the battery. The first connection sheet of the positive lead-out sheet and the first connection sheet of the negative lead-out sheet each are parallel to the first plate piece and the second plate piece.

Optionally, the battery housing further includes a third plate piece and a fourth plate piece that are opposite to each other in a width direction of the battery, and a fifth plate piece and a sixth plate piece that are opposite to each other in a thickness direction of the battery. The second connection sheet of the positive lead-out sheet and the second connection sheet of the negative lead-out sheet each are parallel to the fifth plate piece and the sixth plate piece.

Optionally, the first plate piece, the second plate piece, the third plate piece, the fourth plate piece, and the fifth plate piece are configured as a lower housing with one side open, and the sixth plate piece is fixedly connected to the lower housing to block an open end of the lower housing.

Optionally, the battery further includes a first insulating spacer arranged in the battery housing. At least a part of the first insulating spacer is located between the positive lead-out sheet and the first plate piece, and the positive conductive post passes through the first insulating spacer and is connected to the positive lead-out sheet.

Optionally, the battery further includes a second insulating spacer arranged in the battery housing. At least a part of the second insulating spacer is located between the negative lead-out sheet and the second plate piece, and the negative conductive post passes through the second insulating spacer and is connected to the negative lead-out sheet.

Optionally, a relationship between a cross-sectional area s1 of the positive conductive post and the capacity C of the battery is 6/5≤C/s1≤16/3, and a relationship between a cross-sectional area s2 of the negative conductive post and the capacity C of the battery is 6/5≤C/s2≤8, where units of s1 and s2 are both mm².

Optionally, the cross-sectional area s1 of the positive conductive post and the cross-sectional area s2 of the negative conductive post range from 12 mm² to 315 mm², and the capacity C of the battery ranges from 30 Ah to 400 Ah.

Optionally, the positive conductive post is an aluminum post, and the negative conductive post is a copper post.

A battery pack according to the present disclosure includes the battery described above.

A vehicle according to the present disclosure includes the battery described above or the battery pack described above.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a diagram of a lower housing of a battery according to an embodiment of the present disclosure;
FIG. 2 is a diagram of a battery according to an embodiment of the present disclosure;
FIG. 3 is an enlarged diagram of a part C circled in FIG. 2;
FIG. 4 is a diagram of a battery according to an embodiment of the present disclosure;
FIG. 5 is an enlarged diagram of a part D circled in FIG. 4;
FIG. 6 is a diagram in which a cross section of a first positive (negative) conductive post or a second positive (negative) conductive post is cylindrical according to an embodiment of the present disclosure;
FIG. 7 is a diagram in which a cross section of a first positive (negative) conductive post or a second positive (negative) conductive post is racetrack-shaped according to an embodiment of the present disclosure;
FIG. 8 is a cross-sectional view of a battery according to an embodiment of the present disclosure;
FIG. 9 is an enlarged diagram of a part E circled in FIG. 8;
FIG. 10 is an enlarged diagram of a part H circled in FIG. 8;
FIG. 11 is a diagram of a first insulating spacer according to an embodiment of the present disclosure;
FIG. 12 is a diagram of cooperation of a second insulating spacer and a negative lead-out sheet according to an embodiment of the present disclosure;
FIG. 13 is a diagram of a positive lead-out sheet according to an embodiment of the present disclosure;
FIG. 14 is a diagram of a negative lead-out sheet according to an embodiment of the present disclosure;
FIG. 15 is an exploded view of a battery according to an embodiment of the present disclosure;
FIG. 16 is a diagram of a battery in a direction according to an embodiment of the present disclosure;
FIG. 17 is a diagram of a battery in another direction according to an embodiment of the present disclosure;
FIG. 18 is a diagram of a battery in still another direction according to an embodiment of the present disclosure;
FIG. 19 is a diagram of cooperation between a positive conductive post, a sealing ring, and a battery housing of a battery according to another embodiment of the present disclosure;
FIG. 20 is a diagram of cooperation between a negative conductive post, a sealing ring, and a battery housing of a battery according to still another embodiment of the present disclosure;
FIG. 21 is a temperature rise curve diagram of a positive conductive post and a negative conductive post in a comparative example and Embodiment 1;
FIG. 22 is a temperature rise curve diagram of a positive conductive post and a negative conductive post in a comparative example and Embodiment 2;
FIG. 23 is a temperature rise curve diagram of a positive conductive post and a negative conductive post in a comparative example and Embodiment 3;
FIG. 24 is a temperature rise curve diagram of a positive conductive post and a negative conductive post in a comparative example and Embodiment 4;
FIG. 25 is a temperature rise curve diagram of a positive conductive post and a negative conductive post in a comparative example and Embodiment 5;
FIG. 26 is a temperature rise curve diagram of a positive conductive post and a negative conductive post in a comparative example and Embodiment 6;
FIG. 27 is a temperature rise curve diagram of a positive conductive post and a negative conductive post in a comparative example and Embodiment 7;
FIG. 28 is a temperature rise curve diagram of a positive conductive post and a negative conductive post in a comparative example and Embodiment 8;
FIG. 29 is a temperature rise curve diagram of a positive lead-out sheet and a negative lead-out sheet in a comparative example and Embodiment 1;
FIG. 30 is a temperature rise curve diagram of a positive lead-out sheet and a negative lead-out sheet in a comparative example and Embodiment 2;
FIG. 31 is a temperature rise curve diagram of a positive lead-out sheet and a negative lead-out sheet in a comparative example and Embodiment 3;
FIG. 32 is a temperature rise curve diagram of a positive lead-out sheet and a negative lead-out sheet in a comparative example and Embodiment 4;
FIG. 33 is a temperature rise curve diagram of a positive lead-out sheet and a negative lead-out sheet in a comparative example and Embodiment 5;
FIG. 34 is a temperature rise curve diagram of a positive lead-out sheet and a negative lead-out sheet in a comparative example and Embodiment 6;
FIG. 35 is a temperature rise curve diagram of a positive lead-out sheet and a negative lead-out sheet in a comparative example and Embodiment 7;
FIG. 36 is a temperature rise curve diagram of a positive lead-out sheet and a negative lead-out sheet in a comparative example and Embodiment 8;
FIG. 37 is a diagram of a battery pack according to an embodiment of the present disclosure;
FIG. 38 is a diagram of a vehicle according to an embodiment of the present disclosure; and
FIG. 39 is a diagram of a vehicle according to another embodiment of the present disclosure.

In the drawings:
Vehicle 10000, battery pack 1000, battery 100, battery housing 110, first plate piece 111, second plate piece 112, third plate piece 113, fourth plate piece 114, fifth plate piece 115, sixth plate piece 116, electrode core 120, positive conductive post 131, first positive conductive post 131a, second positive conductive post 131b, first connection member 131c, first insulating plate 131d, positive conductive post flange edge 131e, negative conductive post 132, first negative conductive post 132a, second negative conductive post 132b, second connection member 132c, second insulating plate 132d, negative conductive post flange 132e, positive lead-out sheet 141, positive first connection sheet 141a, positive second connection sheet 141b, negative lead-out sheet 142, negative first connection sheet 142a, negative second connection sheet 142b, first sealing ring 151, second sealing ring 152, first insulating spacer 161, first support piece 161a, first insulating piece vertical plate 161b, first insulating piece horizontal plate 161c, second insulating spacer 162, second support piece 162a, second insulating piece vertical plate 162b, second insulating piece horizontal plate 162c, electrolyte immersion through hole 101, and via 102

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

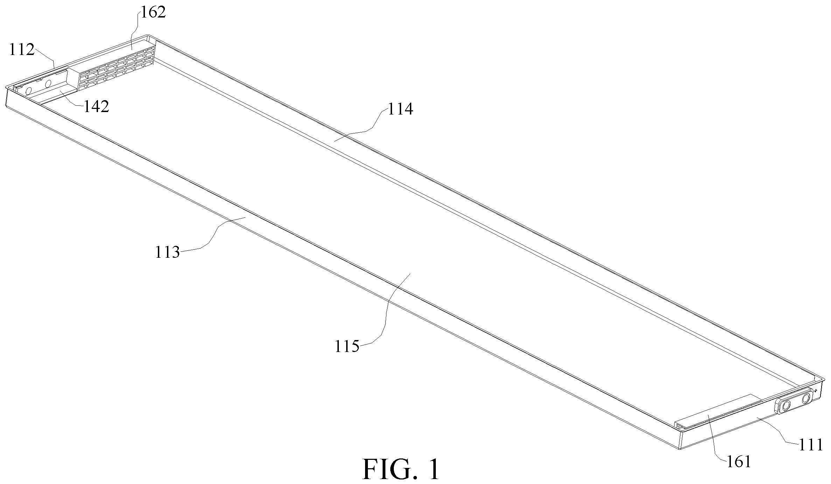

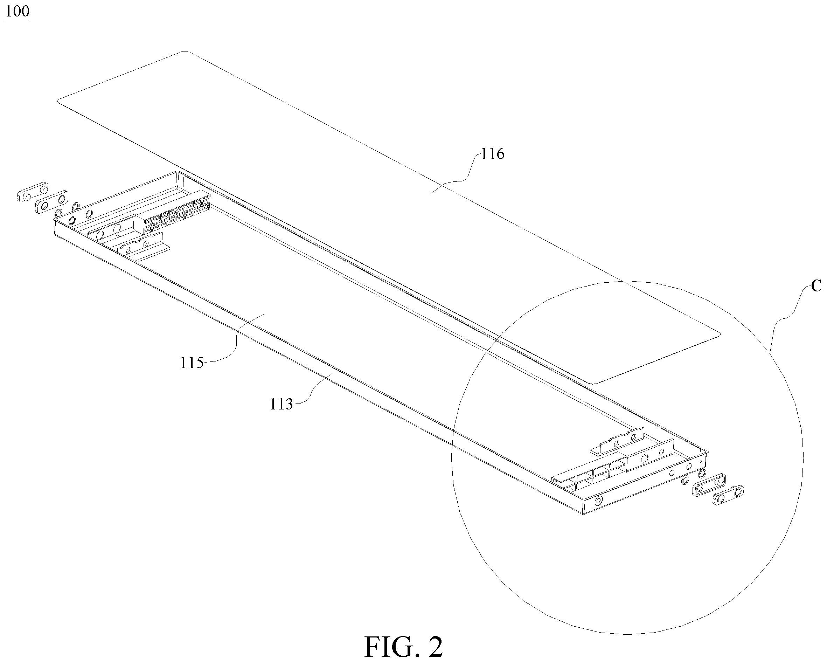

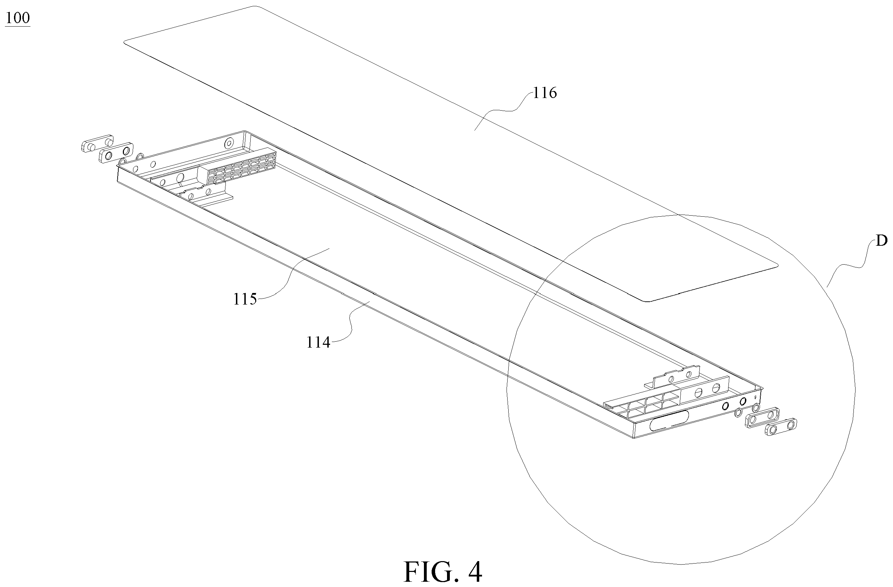

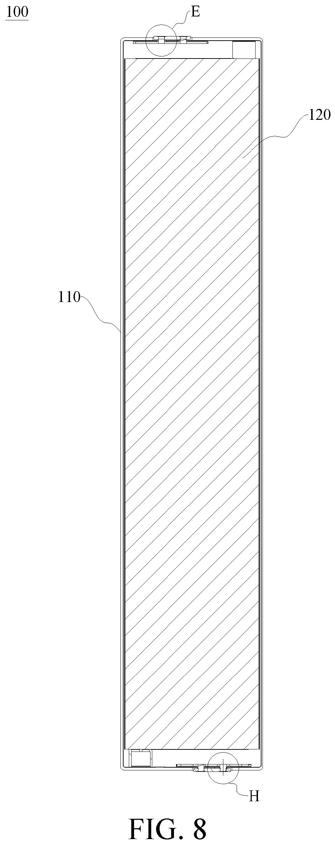

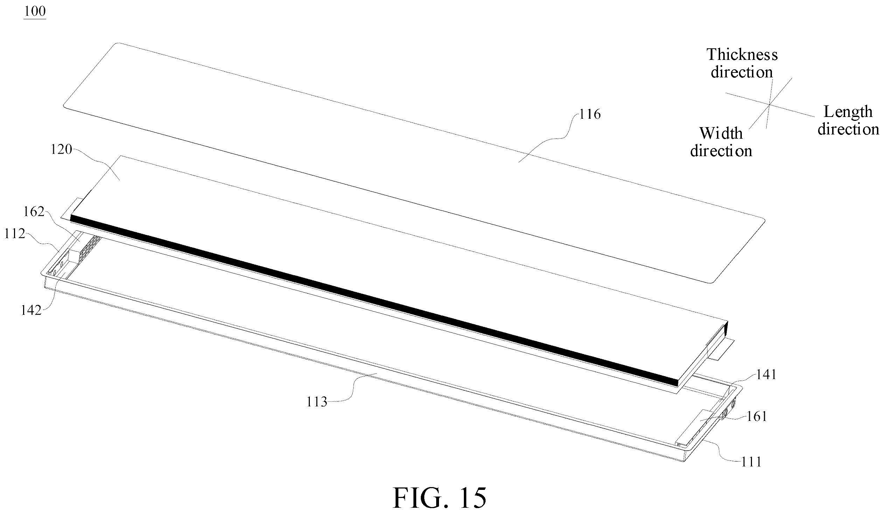

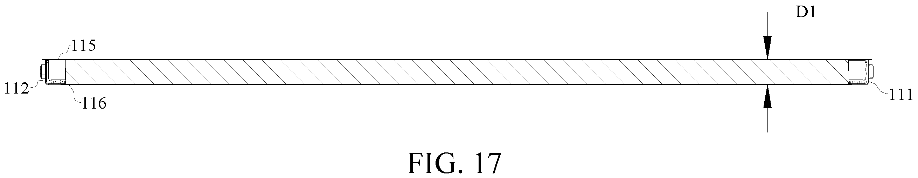

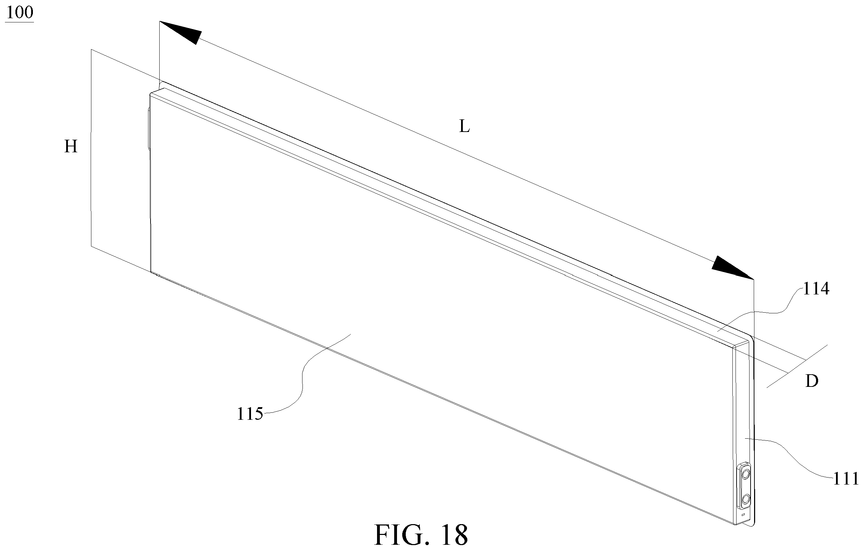

A battery 100 according to the embodiments of the present disclosure is described below with reference to FIG. 1 to FIG. 36.

The battery according to the embodiments of the present disclosure includes a battery housing 110, an electrode core 120, and conductive posts.

The electrode core 120 is arranged in the battery housing 110, and the conductive post passes through the battery housing 110, so that an inner end of the conductive post is connected to the electrode core 120, and an outer end of the conductive post extends out of the battery housing 110. Specifically, the inner end of the conductive post is connected to a tab of the electrode core 120. In addition, a cross-sectional area of the conductive post is s, a capacity of the battery is C, and a relationship between s and C is C/s≤8, where a unit of s is mm², and a unit of C is Ah.

It may be understood that a size of a cross-sectional area of the conductive post represents a current carrying capability of the conductive post. A larger cross-sectional area of the conductive post represents a stronger current carrying capability of the conductive post. In addition, a smallest cross-sectional area on the conductive post determines the current carrying capability of the conductive post. A cross section of the conductive post is a surface orthogonal to a current flow direction. If the conductive post is a cylinder, and the current flow direction of the conductive post is an axial direction of the conductive post, the cross section of the conductive post is a radial cross section, and a shape is circular. When the conductive post is designed by using a variable cross-section, a cross-sectional area of the conductive post may be understood as an area of a smallest cross section on the conductive post.

After extensive experiments and arguments, the inventors of the present disclosure find that the following relationship is satisfied: C/s≤8. This ensures a current carrying capability of the conductive post of the battery 100, and ensures that during use of the battery 100, a temperature does not rise excessively due to a small current carrying area, and does not exceed an operating temperature range of the battery 100, to avoid a thermal security problem of the battery 100.

In some embodiments of the present disclosure, the relationship between the cross-sectional area s of the conductive post and the capacity C of the battery is 6/5≤C/s≤8. The inventors find that a ratio of the capacity C of the battery to the cross-sectional area s of the conductive post is not necessarily better when smaller. A ratio that is too small may cause an excessively large size of the conductive post, resulting in a redundant design.

In some embodiments of the present disclosure, the conductive posts include a positive conductive post 131 and a negative conductive post 132. A relationship between a cross-sectional area s1 of the positive conductive post 131 and the capacity C of the battery is 6/5≤C/s1≤16/3, and a relationship between a cross-sectional area s2 of the negative conductive post 132 and the capacity C of the battery is 6/5≤C/s2≤8, where units of s1 and s2 are both mm². It may be understood that, when the positive conductive post 131 includes multiple positive posts that pass through the battery housing 110 and are connected to positive tabs of the electrode core 120, the cross-sectional area s1 of the positive conductive post 131 is a sum of cross-sectional areas of the multiple positive posts. When the positive post is designed by using a variable cross section, a cross-sectional area of the positive post may be understood as an area of a smallest cross section on the positive post. When the negative conductive post 132 includes multiple negative posts that pass through the battery housing 110 and are connected to negative tabs of the electrode core 120, the cross-sectional area s2 of the negative conductive post 132 is a sum of cross-sectional areas of the multiple negative posts. When the negative post is designed by using a variable cross section, a cross-sectional area of the negative post may be understood as an area of a smallest cross section on the negative post.

Further, the relationship between the cross-sectional area s1 of the positive conductive post 131 and the capacity C of the battery is 8/3≤C/s1≤16/3, and the relationship between the cross-sectional area s2 of the negative conductive post 132 and the capacity C of the battery is 3≤C/s2≤8.

It should be noted that the positive conductive post 131 of the battery 100 may be made of aluminum materials, the negative conductive post 132 may be made of copper materials, and conductivities of the aluminum materials and the copper materials are different. Copper has a stronger current carrying capability than aluminum when cross-sectional areas are the same. Therefore, to ensure same current carrying capabilities of the positive conductive post 131 and the negative conductive post 132, the cross-sectional area of the negative conductive post 132 made of copper may be smaller.

In some embodiments of the present disclosure, the cross-sectional area s1 of the positive conductive post and the cross-sectional area s2 of the negative conductive post range from 12 mm² to 315 mm², and the capacity C of the battery ranges from 30 Ah to 400 Ah.

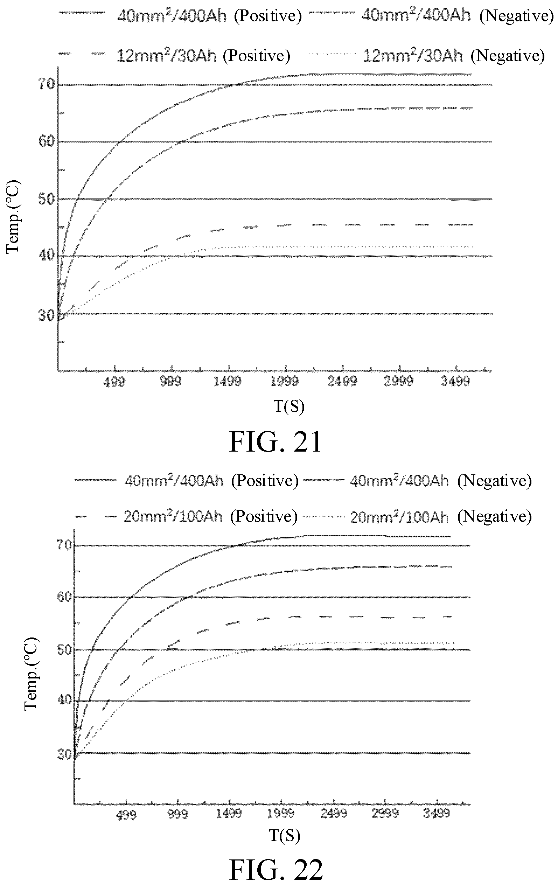

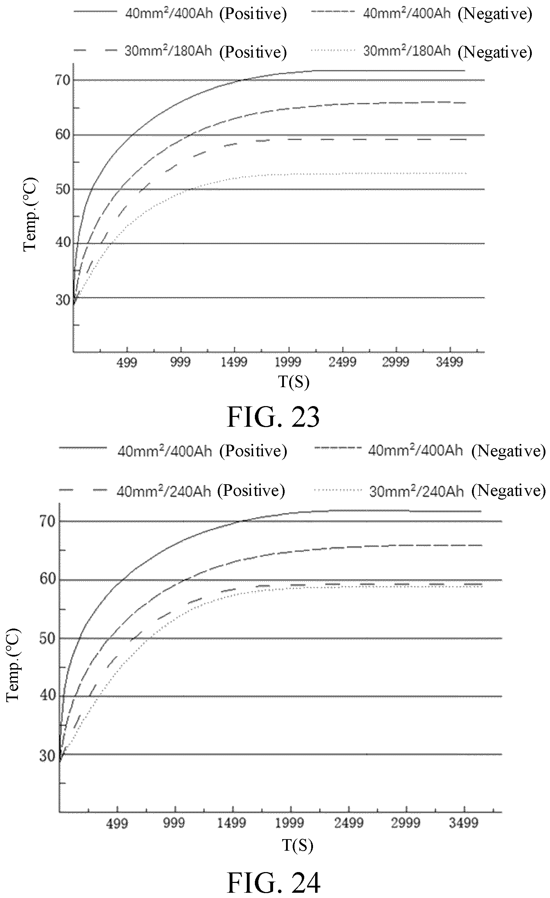

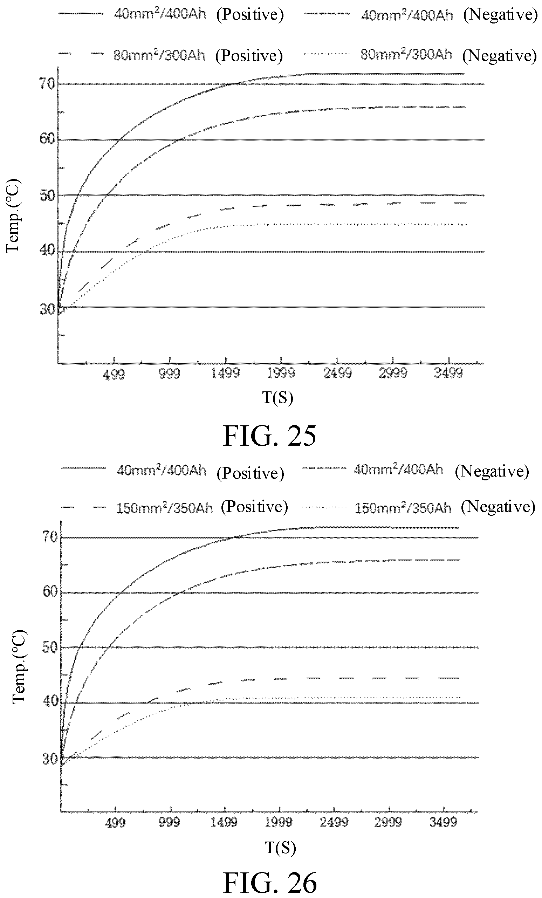

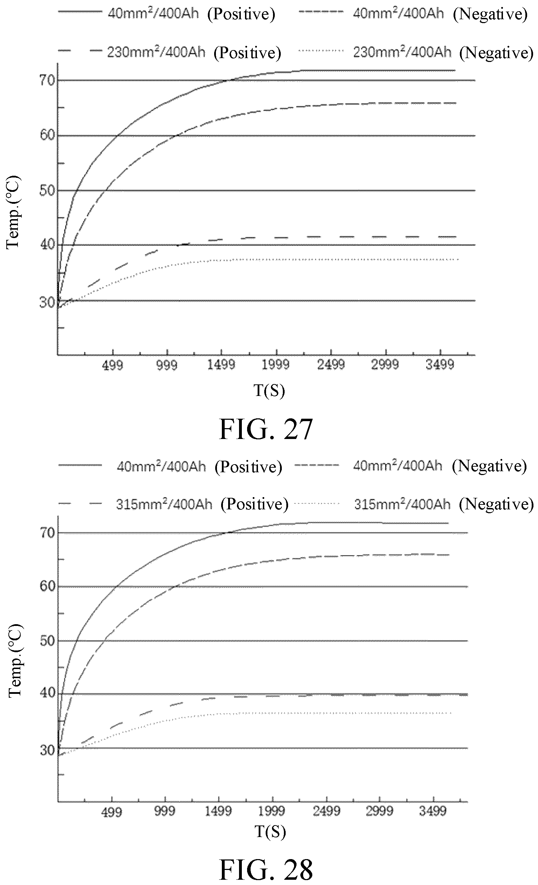

The following describes a comparative example (that is, the related art) and Embodiments 1 to 8 (that is, the embodiments of the present disclosure) in Table 1. In a same operating condition, batteries in the comparative example and Embodiments 1 to 8 each are rapidly charged at a speed of 2C, and temperature rise curves of the positive conductive post 131 and the negative conductive post 132 are recorded. The cross-sectional area s1 of the positive conductive post 131, the cross-sectional area s2 of the negative conductive post 132, and the total capacity C of the battery in the comparative example and Embodiments 1 to 8 are selected from data in Table 1 below. FIG. 21 is a temperature rise curve diagram of the positive conductive post 131 and the negative conductive post 132 in the comparative example and Embodiment 1. FIG. 22 is a temperature rise curve diagram of the positive conductive post 131 and the negative conductive post 132 in the comparative example and Embodiment 2. FIG. 23 is a temperature rise curve diagram of the positive conductive post 131 and the negative conductive post 132 in the comparative example and Embodiment 3. FIG. 24 is a temperature rise curve diagram of the positive conductive post 131 and the negative conductive post 132 in the comparative example and Embodiment 4. FIG. 25 is a temperature rise curve diagram of the positive conductive post 131 and the negative conductive post 132 in the comparative example and Embodiment 5. FIG. 26 is a temperature rise curve diagram of the positive conductive post 131 and the negative conductive post 132 in the comparative example and Embodiment 6. FIG. 27 is a temperature rise curve diagram of the positive conductive post 131 and the negative conductive post 132 in the comparative example and Embodiment 7. FIG. 28 is a temperature rise curve diagram of the positive conductive post 131 and the negative conductive post 132 in the comparative example and Embodiment 8.

**Table 1**

| | s1/mm² | s2/mm² | C/Ah | C/s1 | C/s2 |
|---|---|---|---|---|---|
| Comparative example | 40 | 40 | 400 | 10 | 10 |
| Embodiment 1 | 12 | 12 | 30 | 2.5 | 2.5 |
| Embodiment 2 | 20 | 20 | 100 | 5 | 5 |
| Embodiment 3 | 30 | 30 | 180 | 6 | 6 |
| Embodiment 4 | 40 | 30 | 240 | 6 | 8 |
| Embodiment 5 | 80 | 80 | 300 | 3.75 | 3.75 |
| Embodiment 6 | 150 | 150 | 350 | 2.333333333 | 2.333333333 |
| Embodiment 7 | 230 | 230 | 400 | 1.739130435 | 1.739130435 |
| Embodiment 8 | 315 | 315 | 400 | 1.26984127 | 1.26984127 |

Compared with the comparative example, in Embodiments 1 to 8, temperature rises of the positive conductive post 131 and the negative conductive post 132 are lower, to ensure that the battery is in a good working state.

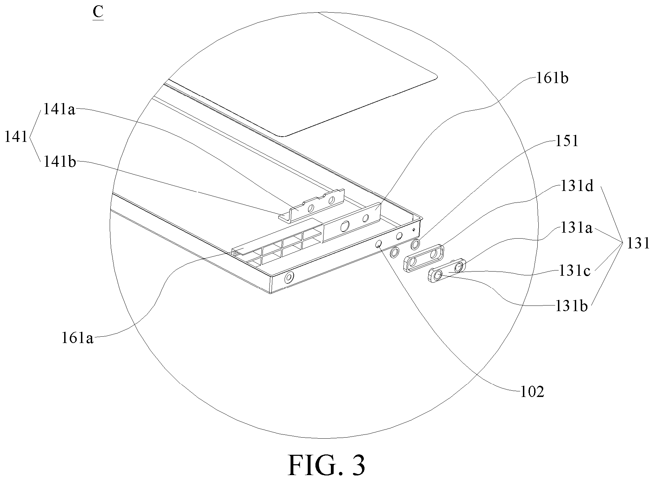

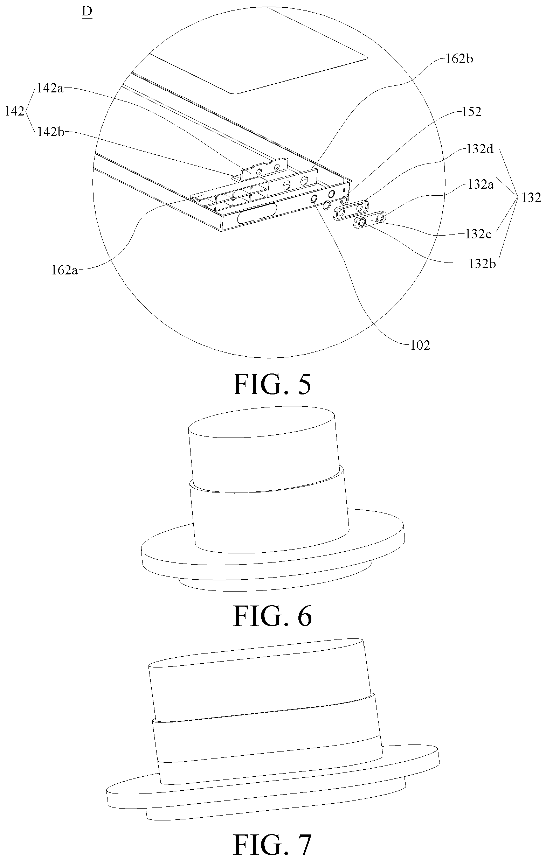

Further, as shown in FIG. 3 and FIG. 5, the positive conductive post 131 includes a first positive conductive post 131a, a second positive conductive post 131b, and a first connection member 131c. Both the first positive conductive post 131a and the second positive conductive post 131b pass through the battery housing 110 and are connected to positive tabs of the electrode core 120. The first connection member 131c is arranged outside the battery housing 110 and is electrically connected to the first positive conductive post 131a and the second positive conductive post 131b. The cross-sectional area s1 of the positive conductive post 131 is a sum of a cross-sectional area of the first positive conductive post 131a and a cross-sectional area of the second positive conductive post 131b.

The negative conductive post 132 includes a first negative conductive post 132a, a second negative conductive post 132b, and a second connection member 132c. Both the first negative conductive post 132a and the second negative conductive post 132b pass through the battery housing 110 and are connected to negative tabs of the electrode core 120. The second connection member 132c is arranged outside the battery housing 110 and is electrically connected to the first negative conductive post 132a and the second negative conductive post 132b. The cross-sectional area s2 of the negative conductive post 132 is a sum of a cross-sectional area of the first negative conductive post 132a and a cross-sectional area of the second negative conductive post 132b.

The first connection member 131c is connected between an outer end of the first positive conductive post 131a and an outer end of the second positive conductive post 131b, so that a contact area between the first positive conductive post 131a and the second positive conductive post 131b is increased, and the positive conductive post 131 can be connected to the outside more easily. The second connection member 132c is connected between an outer end of the first negative conductive post 132a and an outer end of the second negative conductive post 132b, so that a contact area between the first negative conductive post 132a and the second negative conductive post 132b is increased, and the negative conductive post 132 can be connected to the outside more easily.

In some embodiments of the present disclosure, cross sections of the first positive conductive post 131a and the second positive conductive post 131b are circular or obround-shaped, and cross sections of the first negative conductive post 132a and the second negative conductive post 132b are circular or obround-shaped. If a size of the battery housing 110 in a thickness direction is large, the first positive conductive post 131a, the second positive conductive post 131b, the first negative conductive post 132a, and the second negative conductive post 132b with a circular cross section may be used. However, if the size of the battery housing 110 in the thickness direction is small, the first positive conductive post 131a, the second positive conductive post 131b, the first negative conductive post 132a, and the second negative conductive post 132b with an obround-shaped cross section may be used. This can ensure that the first positive conductive post 131a, the second positive conductive post 131b, the first negative conductive post 132a, and the second negative conductive post 132b do not exceed the size of the battery housing 110 in the thickness direction on the premise that the positive conductive post 131 and the negative conductive post 132 have sufficient current carrying capabilities.

In some embodiments of the present disclosure, as shown in FIG. 1 to FIG. 4 and FIG. 15 to FIG. 20, the battery housing 110 includes a first plate piece 111 and a second plate piece 112 that are opposite to each other in a length direction of the battery 100, a third plate piece 113 and a fourth plate piece 114 that are opposite to each other in a width direction of the battery 100, and a fifth plate piece 115 and a sixth plate piece 116 that are opposite to each other in the thickness direction of the battery 100. A size of the battery 100 in the length direction is greater than a size of the battery 100 in the width direction, and the size of the battery 100 in the width direction is greater than the size of the battery 100 in the thickness direction.

The first plate piece 111 and the second plate piece 112 are respectively connected to one end and the other end on a same side of the third plate piece 113 and the fourth plate piece 114 in the length direction of the battery 100. In other words, the first plate piece 111 is connected to one end on the same side of the third plate piece 113 and the fourth plate piece 114 in the length direction of the battery 100, and the second plate piece 112 is connected to the other end on the same side of the third plate piece 113 and the fourth plate piece 114 in the length direction of the battery 100. The fifth plate piece 115 and the sixth plate piece 116 are respectively connected to one end and the other end on a same side of the third plate piece 113 and the fourth plate piece 114 in the thickness direction of the battery 100. In other words, the fifth plate piece 115 is connected to one end on the same side of the third plate piece 113 and the fourth plate piece 114 in the thickness direction of the battery 100, and the sixth plate piece 116 is connected to the other end on the same side of the third plate piece 113 and the fourth plate piece 114 in the thickness direction of the battery 100.

The positive conductive post 131 is arranged on the first plate piece 111, the negative conductive post 132 is arranged on the second plate piece 112, a first insulating plate 131d is arranged between the first plate piece 111 and the first connection member 131c, and a second insulating plate 132d is arranged between the second plate piece 112 and the second connection member 132c. This can effectively avoid an electrical connection between the first connection member 131c and the battery housing 110, and an electrical connection between the second connection member 132c and the battery housing 110.

Further, a first via through which the first positive conductive post 131a passes and a second via through which the second positive conductive post 131b passes are provided on the first plate piece 111, and a third via through which the first negative conductive post 132a passes and a fourth via through which the second negative conductive post 132b passes are provided on the second plate piece 112.

A positive lead-out sheet 141 and a negative lead-out sheet 142 are further arranged in the battery housing 110. The positive lead-out sheet 141 may be connected to a positive tab of the electrode core 120, in addition, the positive lead-out sheet 141 is further connected to the positive conductive post 131, the negative lead-out sheet 142 may be connected to a negative tab of the electrode core 120, and in addition, the negative lead-out sheet 142 is further connected to the negative conductive post 132.

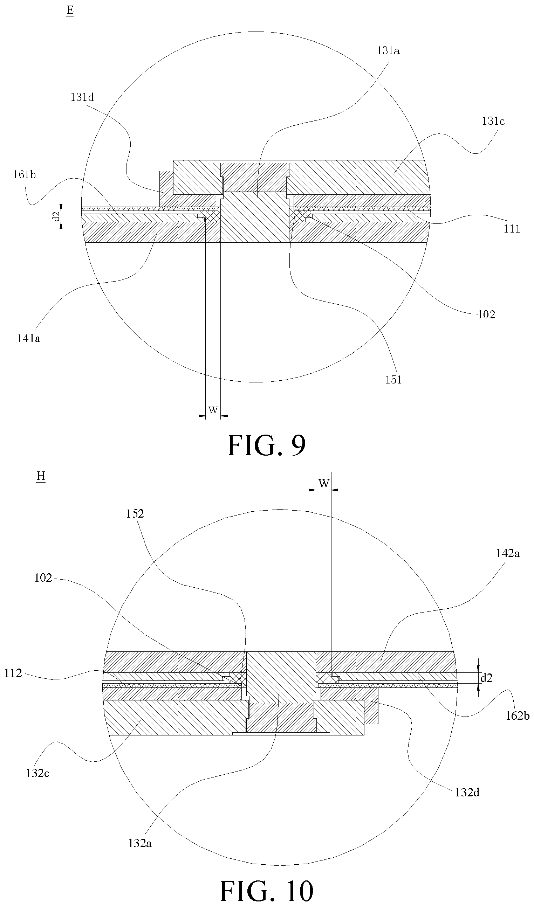

As shown in FIG. 9 and FIG. 10, a first sealing ring 151 is sleeved on the positive conductive post 131, and the first sealing ring 151 is sandwiched between the positive lead-out sheet 141 and the first plate piece 111. A second sealing ring 152 is sleeved on the negative conductive post 132, and the second sealing ring 152 is sandwiched between the negative lead-out sheet 142 and the second plate piece 112. In this way, the positive conductive post 131 is limited by the first sealing ring 151, so that the positive conductive post 131 does not contact an inner wall of a via that is on the first plate piece 111 and through which the positive conductive post 131 passes, and the negative conductive post 132 is limited by the second sealing ring 152, so that the negative conductive post 132 does not contact an inner wall of a via that is on the second plate piece 112 and through which the negative conductive post 132 passes.

A first insulating spacer 161 is further arranged between the positive lead-out sheet 141 and the first plate piece 111. The positive conductive post 131 passes through the first insulating spacer 161 and is connected to the positive lead-out sheet 141. The first insulating spacer 161 is an insulating member. The first insulating spacer 161 can avoid contact between the positive lead-out sheet 141 and the battery housing 110, to improve security performance of the battery 100.

A second insulating spacer 162 is further arranged between the negative lead-out sheet 142 and the second plate piece 112. The negative conductive post 132 passes through the second insulating spacer 162 and is connected to the negative lead-out sheet 142. The second insulating spacer 162 is an insulating member. The second insulating spacer 162 can avoid contact between the negative lead-out sheet 142 and the battery housing 110, to improve security performance of the battery 100.

Further, a first step piece that is matched with an inner end of the first sealing ring 151 is arranged on an outer surface of the first insulating spacer 161, and the first step piece may limit movement of the first sealing ring 151 and the positive conductive post 131, to avoid direct contact between the positive conductive post 131 and the battery housing 110. A second step piece that is matched with an inner end of the second sealing ring 152 is arranged on an outer surface of the second insulating spacer 162, and the second step piece may limit movement of the second sealing ring 152 and the negative conductive post 132, to avoid direct contact between the negative conductive post 132 and the battery housing 110.

It may be understood that a part of an inner end of the positive conductive post 131 is matched with a step piece on the first insulating spacer 161, another part of the positive conductive post 131 abuts against the positive lead-out sheet 141, a part of an inner end of the negative conductive post 132 is matched with a step piece on the second insulating spacer 162, and another part of the negative conductive post 132 abuts against the negative lead-out sheet 142.

In some embodiments of the present disclosure, sizes of a first insulating piece vertical plate 161b and a second insulating piece vertical plate 162b each range from 0.3 mm to 1.5 mm in a length direction of the battery housing. To ensure that the positive lead-out sheet 141 and the negative lead-out sheet 142 are insulated from the battery housing 110, and minimize space occupied in the length direction of the battery housing 110, when a thickness is less than 0.3 mm, welding heat may melt a spacer when a tab and a lead-out sheet are welded, resulting in insufficient insulation. When a thickness is greater than 1.5 mm, too much space of the electrode core 120 is occupied, resulting in reduced space utilization, and a design capacity of the battery 100 is affected. Therefore, after multiple experiments and adjustments by the inventors of the present disclosure, sizes of both the first insulating piece vertical plate 161b and the second insulating piece vertical plate 162b are selected as 0.3 mm to 1.5 mm in the length direction of the battery housing 110.

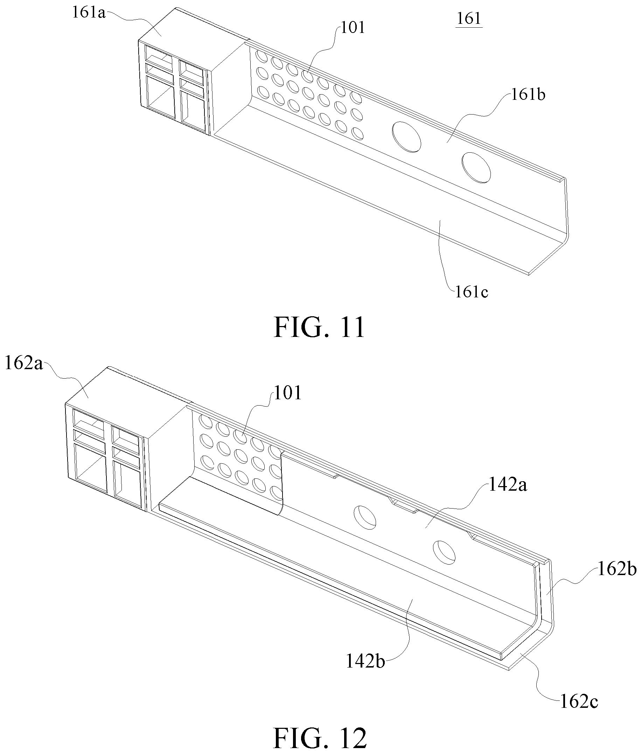

As shown in FIG. 11 and FIG. 12, the first insulating spacer 161 includes a first support piece 161a and a first insulating piece connected to the first support piece 161a. An inner end and an outer end of the first support piece 161a respectively abut against the electrode core 120 and the first plate piece 111 of the battery 100, and the first insulating piece is matched with the positive lead-out sheet 141 and is arranged between the positive lead-out sheet 141 and the battery housing 110. The second insulating spacer 162 includes a second support piece 162a and a second insulating piece connected to the second support piece 162a. An inner end and an outer end of the second support piece 162a respectively abut against an end of the electrode core 120 and the second plate piece 112, and the second insulating piece is matched with the negative lead-out sheet 142 and is arranged between the negative lead-out sheet 142 and the battery housing 110.

The first insulating piece includes the first insulating piece vertical plate 161b and a first insulating piece horizontal plate 161c. The first insulating piece vertical plate 161b is arranged between a positive first connection sheet 141a and the first plate piece 111, and the first insulating piece horizontal plate 161c is arranged between a positive second connection sheet 141b and a side plate of the battery housing 110 in the thickness direction. The second insulating piece includes the second insulating piece vertical plate 162b and a second insulating piece horizontal plate 162c. The second insulating piece vertical plate 162b is arranged between a negative first connection sheet 142a and the second plate piece 112, and the second insulating piece horizontal plate 162c is arranged between a negative second connection sheet 142b and a side plate of the battery housing 110 in the thickness direction.

In some embodiments of the present disclosure, the first plate piece 111, the second plate piece 112, the third plate piece 113, the fourth plate piece 114, and the fifth plate piece 115 are configured as a lower housing with one side open, and the sixth plate piece 116 is fixedly connected to the lower housing to block an open end of the lower housing. Therefore, the electrode core 120 enters the inside of the battery housing 110 not through a narrow channel, but through a very wide open end, to greatly reduce installation costs and save installation time.

Specifically, the first insulating piece horizontal plate 161c is arranged between the positive second connection sheet 141b and the fifth plate piece 115, and the second insulating piece horizontal plate 162c is arranged between the negative second connection sheet 142b and the fifth plate piece 115.

A size of the first support piece 161a in the length direction of the battery housing 110 is greater than a size of the first insulating piece vertical plate 161b in the length direction of the battery housing 110, and a size of the second support piece 162a in the length direction of the battery housing 110 is greater than a size of the second insulating piece vertical plate 162b in the length direction of the battery housing 110. Therefore, the first support piece 161a and the second support piece 162a may firmly clamp the electrode core 120 inside the battery housing 110, to prevent the electrode core 120 from moving inside the battery housing 110.

In some embodiments of the present disclosure, an outer surface of the positive conductive post 131 extends out of the battery housing and has a distance of 2 mm to 5 mm from an outer surface of the first plate piece 111, and an outer surface of the negative conductive post 132 extends out of the battery housing and has a distance of 2 mm to 5 mm from an outer surface of the second plate piece 112. Therefore, it is ensured that the positive conductive post 131 and the negative conductive post 132 can have enough protrusion to connect to an external electrical component. In addition, when an overall length of the battery 100 is fixed, space of the battery 100 in the length direction is not excessively occupied, to ensure that the battery 100 has enough capacity.

According to the battery 100 in this embodiment of the present disclosure, the electrode core 120 and the lead-out sheet are both arranged in the battery housing 110, and the lead-out sheet and the electrode core 120 are connected. Specifically, the lead-out sheet is connected to a tab of the electrode core 120, the conductive post passes through the battery housing 110, an inner end of the conductive post is connected to the lead-out sheet, and an outer end of the conductive post protrudes from the battery housing 110, so that the conductive post can charge and discharge the electrode core 120.

A relationship between a cross-sectional area s_{lead} of the lead-out sheet and a capacity C of the battery is C/s_{lead}≤15. It should be noted that a cross-sectional area on the lead-out sheet determines a current carrying capability of the lead-out sheet. Therefore, in this relationship, a ratio of the capacity of the battery to the cross-sectional area of the lead-out sheet indicates the current carrying capability of the lead-out sheet. It should be noted that a cross section of the lead-out sheet is a surface orthogonal to a current flow direction or a surface perpendicular to a thickness direction of the lead-out sheet. When the lead-out sheet is designed by using a variable cross section, a cross-sectional area of the lead-out sheet is an area of a smallest cross section on the lead-out sheet.

After extensive experiments, the inventors of the present disclosure find that this relationship can ensure a current carrying capability of the lead-out sheet, and ensure that a temperature of the lead-out sheet does not rise excessively due to a small current carrying area during use of the battery 100, so that internal temperature distribution of the battery 100 is not affected, an internal temperature of the battery 100 does not exceed an operating temperature range of the battery 100, and a thermal security problem of the battery 100 is not caused.

Further, the relationship between the cross-sectional area s_{lead} of the lead-out sheet and the capacity C of the battery is 2≤C/s_{lead}≤15. Therefore, it can be further ensured that the lead-out sheet has a sufficient current carrying capability. The inventors find that a ratio of the capacity C of the battery to the cross-sectional area s of the lead-out sheet is not necessarily better when smaller. A ratio that is too small may cause an excessively large size of the lead-out sheet, resulting in a redundant design and excessive occupation of internal space of the battery.

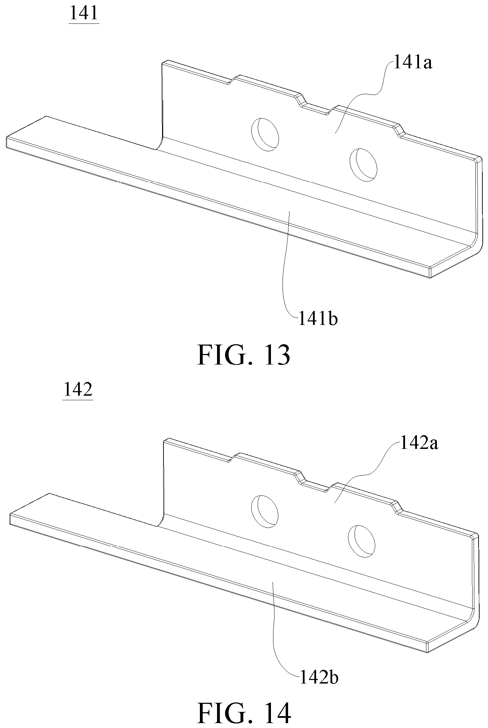

In some embodiments of the present disclosure, as shown in FIG. 13 and FIG. 14, the lead-out sheets include the positive lead-out sheet 141 and the negative lead-out sheet 142. The conductive posts include the positive conductive post 131 and the negative conductive post 132. The positive conductive post 131 passes through the battery housing 110 and is connected to the positive lead-out sheet 141. The negative conductive post 132 passes through the battery housing 110 and is connected to the negative lead-out sheet 142. The positive lead-out sheet 141 is connected to a positive tab of the electrode core 120, and the negative lead-out sheet 142 is connected to a negative tab of the electrode core 120.

A relationship between a cross-sectional area s_{positive lead} of the positive lead-out sheet 141 and the capacity C of the battery is 5≤C/s_{positive lead}≤12, and a relationship between a cross-sectional area s_{negative lead} of the negative lead-out sheet 142 and the capacity C of the battery is 6≤C/s_{negative lead}≤15. The positive lead-out sheet 141 may be an aluminum sheet, and the negative lead-out sheet 142 may be a copper sheet. A current carrying capability of the aluminum sheet is less than a current carrying capability of the copper sheet when cross-sectional areas are the same. Therefore, a cross section of the copper sheet may be reduced when the positive lead-out sheet 141 and the negative lead-out sheet 142 have same current capabilities.

In some embodiments of the present disclosure, the cross-sectional area of the positive lead-out sheet 141 ranges from 14 mm² to 150 mm², the cross-sectional area of the negative lead-out sheet 142 ranges from 10 mm² to 130 mm², and the capacity C of the battery ranges from 30 Ah to 400 Ah.

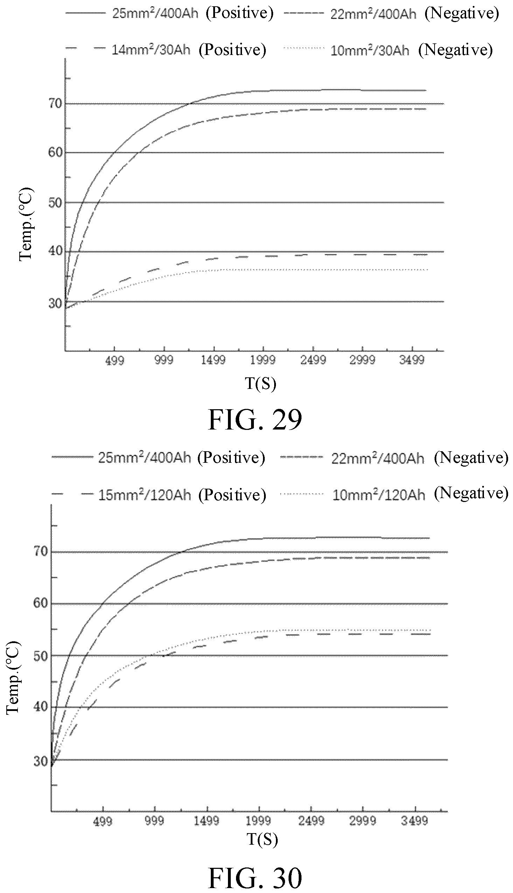

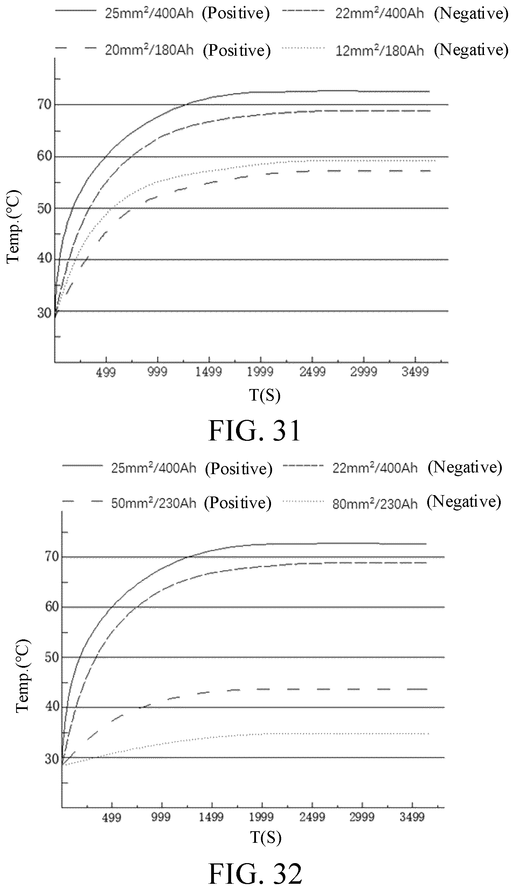

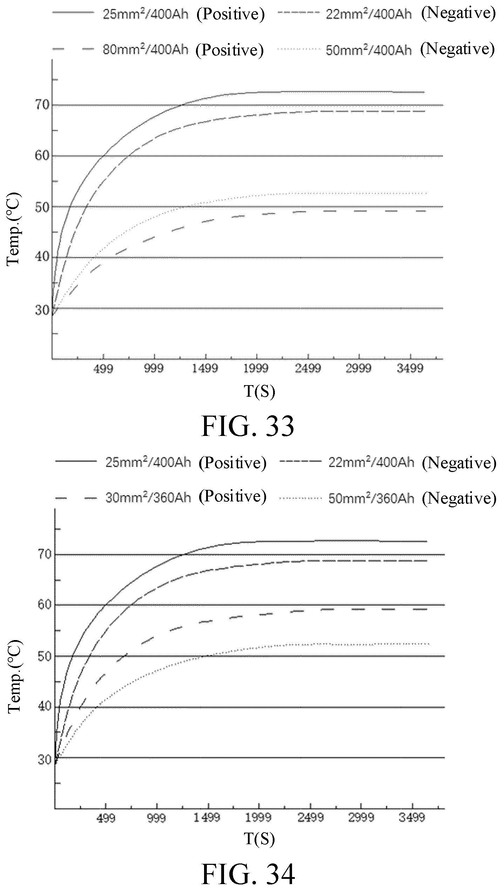

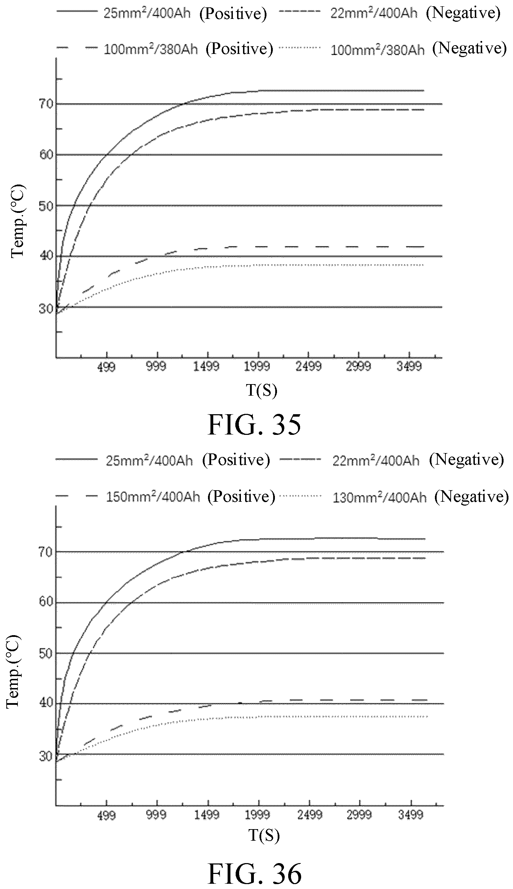

The following describes a comparative example (that is, the related art) and Embodiments 1 to 8 (that is, the embodiments of the present disclosure) in Table 2. In a same operating condition, batteries in the comparative example and Embodiments 1 to 8 each are rapidly charged at a speed of 2C, and temperature rise curves of the positive lead-out sheet 141 and the negative lead-out sheet 142 are recorded. The cross-sectional area s_{positive lead} of the positive lead-out sheet 141, the cross-sectional area s_{negative lead} of the negative lead-out sheet 142, and the total capacity C of the battery in the comparative example and Embodiments 1 to 8 are selected from data in the following Table 2. FIG. 29 is a temperature rise curve diagram of the positive lead-out sheet 141 and the negative lead-out sheet 142 in the comparative example and Embodiment 1. FIG. 30 is a temperature rise curve diagram of the positive lead-out sheet 141 and the negative lead-out sheet 142 in the comparative example and Embodiment 2. FIG. 31 is a temperature rise curve diagram of the positive lead-out sheet 141 and the negative lead-out sheet 142 in the comparative example and Embodiment 3. FIG. 32 is a temperature rise curve diagram of the positive lead-out sheet 141 and the negative lead-out sheet 142 in the comparative example and Embodiment 4. FIG. 33 is a temperature rise curve diagram of the positive lead-out sheet 141 and the negative lead-out sheet 142 in the comparative example and Embodiment 5. FIG. 34 is a temperature rise curve diagram of the positive lead-out sheet 141 and the negative lead-out sheet 142 in the comparative example and Embodiment 6. FIG. 35 is a temperature rise curve diagram of the positive lead-out sheet 141 and the negative lead-out sheet 142 in the comparative example and Embodiment 7. FIG. 36 is a temperature rise curve diagram of the positive lead-out sheet 141 and the negative lead-out sheet 142 in the comparative example and Embodiment 8.

**Table 2**

| | Spositive lead/mm² | Snegative lead/mm² | C/Ah | C/spositive lead | C/Snegative lead |
|---|---|---|---|---|---|
| Comparative example | 25 | 22 | 400 | 16 | 18.18181818 |
| Embodiment 1 | 14 | 10 | 30 | 2.142857143 | 3 |
| Embodiment 2 | 15 | 10 | 120 | 8 | 12 |
| Embodiment 3 | 20 | 12 | 180 | 9 | 15 |
| Embodiment 4 | 50 | 80 | 230 | 4.6 | 2.875 |
| Embodiment 5 | 80 | 50 | 400 | 5 | 8 |
| Embodiment 6 | 30 | 50 | 360 | 12 | 7.2 |
| Embodiment 7 | 100 | 100 | 380 | 3.8 | 3.8 |
| Embodiment 8 | 150 | 130 | 400 | 2.666666667 | 3.076923077 |

Compared with the comparative example, in Embodiments 1 to 8, temperature rises of the positive lead-out sheet 141 and the negative lead-out sheet 142 are lower, to ensure that the battery is in a good working state.

Further, as shown in FIG. 13 and FIG. 14, the positive lead-out sheet 141 and the negative lead-out sheet 142 have a same structure and each include a first connection sheet and a second connection sheet that are connected. The second connection sheet of the positive lead-out sheet 141 is directly opposite to the fifth plate piece 115 and is fixedly connected to a positive tab of the electrode core 120, the first connection sheet of the positive lead-out sheet 141 is directly opposite to the first plate piece 111 and is connected to the positive conductive post 131, the second connection sheet of the negative lead-out sheet 142 is directly opposite to the fifth plate piece 115 and is fixedly connected to a negative tab of the electrode core 120, and the first connection sheet of the negative lead-out sheet 142 is directly opposite to the second plate piece 112 and is connected to the negative conductive post 132. For ease of description, the first connection sheet of the positive lead-out sheet 141 may be denoted as the positive first connection sheet 141a, and the second connection sheet of the positive lead-out sheet 141 may be denoted as the positive second connection sheet 141b. Similarly, the first connection sheet of the negative lead-out sheet 142 may be denoted as the negative first connection sheet 142a, and the second connection sheet of the negative lead-out sheet 142 may be denoted as the negative second connection sheet 142b.

In some embodiments of the present disclosure, sizes of both the positive first connection sheet 141a and the negative first connection sheet 142a range from 0.8 mm to 0.2 mm in the length direction of the battery housing.

The battery housing 110 includes the first plate piece 111 and the second plate piece 112 that are opposite to each other in the length direction. The first connection sheet (that is, the positive first connection sheet 141a) of the positive lead-out sheet 141 is parallel to the first plate piece 111, and the first connection sheet (that is, the negative first connection sheet 142a) of the negative lead-out sheet 142 is parallel to the second plate piece 112.

The first insulating spacer 161 is arranged between the positive lead-out sheet 141 and the first plate piece 111, and the positive conductive post 131 passes through the first insulating spacer 161 and is connected to the positive lead-out sheet 141. The second insulating spacer 162 is arranged between the negative lead-out sheet 142 and the second plate piece 112, and the negative conductive post 132 passes through the second insulating spacer 162 and is connected to the negative lead-out sheet 142. This can avoid direct contact of the positive lead-out sheet 141 and the negative lead-out sheet 142 from the battery housing 110, and improve overall security performance of the battery 100.

At least a part of the first insulating spacer 161 is arranged between the second connection sheet of the positive lead-out sheet 141 and the fifth plate piece 115, and at least a part of the second insulating spacer 162 is arranged between the second connection sheet of the negative lead-out sheet 142 and the fifth plate piece 115. In other words, the first insulating spacer 161 may not only separate the positive lead-out sheet 141 from the first plate piece 111, but also separate the positive lead-out sheet 141 from the fifth plate piece 115. The second insulating spacer 162 may not only separate the negative lead-out sheet 142 from the second plate piece 112, but also separate the negative lead-out sheet 142 from the fifth plate piece 115.

As shown in FIG. 1 to FIG. 14, the first insulating spacer 161 includes the first support piece 161a and the first insulating piece connected to the first support piece 161a. The inner end and the outer end of the first support piece 161a respectively abut against an end of the electrode core 120 of the battery 100 and the first plate piece 111, and the first insulating piece is matched with the positive lead-out sheet 141 and is arranged between the positive lead-out sheet 141 and the battery housing 110. The second insulating spacer 162 includes the second support piece 162a and the second insulating piece connected to the second support piece 162a. The inner end and the outer end of the second support piece 162a respectively abut against an end of the electrode core 120 of the battery 100 and the second plate piece 112, and the second insulating piece is matched with the negative lead-out sheet 142 and is arranged between the negative lead-out sheet 142 and the battery housing 110.

The first insulating piece includes the first insulating piece vertical plate 161b and the first insulating piece horizontal plate 161c. The first insulating piece vertical plate 161b is arranged between the positive first connection sheet 141a and the first plate piece 111, and the first insulating piece horizontal plate 161c is arranged between the positive second connection sheet 141b and the fifth plate piece 115. The second insulating piece includes the second insulating piece vertical plate 162b and the second insulating piece horizontal plate 162c. The second insulating piece vertical plate 162b is arranged between the negative first connection sheet 142a and the second plate piece 112, and the second insulating piece horizontal plate 162c is arranged between the negative second connection sheet 142b and the fifth plate piece 115.

A thickness of the first support piece 161a in the length direction of the battery housing 110 is greater than a thickness of the first insulating piece vertical plate 161b in the length direction of the battery housing 110. Therefore, the first support piece 161a can abut against one end of the electrode core 120. A thickness of the second support piece 162a in the length direction of the battery housing 110 is greater than a thickness of the second insulating piece vertical plate 162b in the length direction of the battery housing 110. Therefore, the second support piece 162a can abut against the other end of the electrode core 120. Therefore, the first support piece 161a and the second support piece 162a can jointly abut against the electrode core 120 in the length direction of the battery housing 110, to avoid movement of the electrode core 120 in the length direction of the battery housing 110.

Specifically, the first insulating piece vertical plate 161b is arranged between the positive first connection sheet 141a and the first plate piece 111, the first insulating piece horizontal plate 161c is arranged between the positive second connection sheet 141b and the fifth plate piece 115, the second insulating piece vertical plate 162b is arranged between the negative first connection sheet 142a and the second plate piece 112, and the second insulating piece horizontal plate 162c is arranged between the negative second connection sheet 142b and the fifth plate piece 115.

The positive lead-out sheet 141 and the first insulating piece each may be configured as an "L"-shaped structure, and the positive lead-out sheet 141 may be arranged on the inner side of the first insulating piece and the two are bonded to each other. The negative lead-out sheet 142 and the second insulating piece each may also be configured as an "L"-shaped structure, and the negative lead-out sheet 142 may be arranged on the inner side of the second insulating spacer piece and the two are bonded to each other.

In some embodiments of the present disclosure, sizes of the first insulating piece vertical plate 161b and the positive first connection sheet 141a each range from 0.3 mm to 1.5 mm in the length direction of the battery housing 110. That is, a thickness of the first insulating piece vertical plate 161b and a thickness of the positive first connection sheet 141a each range from 0.3 mm to 1.5 mm.

This can ensure that the positive lead-out sheet 141 and the negative lead-out sheet 142 are insulated from the battery housing 110, and minimize space occupied in the battery housing 110 in the length direction, when a thickness is less than 0.3 mm, welding heat may melt a spacer when a tab and a lead-out sheet are welded, resulting in insufficient insulation. When a thickness is greater than 1.5 mm, too much space of the electrode core 120 is occupied, resulting in reduced space utilization, and a design capacity of the battery 100 is affected.

The battery 100 in the embodiments of the present disclosure further includes a sealing ring. The sealing ring is hermetically connected between the conductive post and the battery housing 110, the sealing ring is configured as an elastic member, and the sealing ring is an insulating member, so that the lead-out sheet can be effectively insulated from the battery housing 110. An initial size of the sealing ring in an axial direction of the sealing ring is d1, a size of the sealing ring after compression in the axial direction of the sealing ring is d2, and d1 and d2 meet 0.5≤d2/d1≤0.9. Units of d1 and d2 are both mm.

In some embodiments, the sealing ring is sleeved on the conductive post and is sandwiched between an inner wall of the battery housing 110 and the lead-out sheet. It should be noted that an initial size d1 of the sealing ring in the axial direction of the sealing ring may be understood as an axial size of the sealing ring that is elastically reset after decompression (d1 is a distance between two end surfaces that are opposite to each other in the axial direction of the sealing ring after the sealing ring is reset). When the sealing ring is sandwiched between the inner wall of the battery housing and the lead-out sheet, d2 may be understood as a distance between two opposite surfaces of the sealing ring along the axial direction of the sealing ring. One surface of the two surfaces is a surface of the sealing ring in contact with the inner wall of the battery housing, and the other surface is a surface of the sealing ring in contact with the lead-out sheet.

The initial size of the sealing ring in the axial direction is a size of the sealing ring in the axial direction after the sealing ring is not compressed. After the sealing ring is compressed, a size of the sealing ring decreases in the axial direction. However, a ratio between the size of the compressed sealing ring to the initial size is limited. This can ensure that the sealing ring has a compression amount, facilitate installing a spacer on the lead-out sheet and the conductive post, and can also ensure sealing performance between the lead-out sheet and the battery housing 110 and sealing performance between the conductive post and the sealing ring. In addition, the capacity of the battery is improved without changing a size of the battery.

After the sealing ring is compressed, a size of the sealing ring in the axial direction decreases. Therefore, a size of the sealing ring in a radial direction naturally increases, two side surfaces of the sealing ring in the axial direction each are configured as a ring, an outer end of the sealing ring in the axial direction is in contact with the inner wall of the battery housing 110, and an inner end of the sealing ring in the axial direction is in contact with the lead-out sheet. Therefore, the two ends of the sealing ring in the axial direction are sandwiched between the battery housing 110 and the lead-out sheet.

At least one of a width of a contact area between the sealing ring and the inner wall of the battery housing 110 and a width of a contact area between the sealing ring and the lead-out sheet is W, and W meets 1.2 mm≤W≤2.5 mm. This ensures sealing between the sealing ring and the inner wall of the battery housing 110, and sealing between the sealing ring and the lead-out sheet. The width of the contact between the sealing ring and the inner wall of the battery housing 110 may be understood as a distance between two outer contours of the contact area between the sealing ring and the inner wall of the battery housing 110 in the radial direction of the sealing ring. The width of the contact area between the sealing ring and the lead-out sheet may be understood as a distance between two outer contours of the contact area between the sealing ring and the lead-out sheet in the radial direction of the sealing ring.

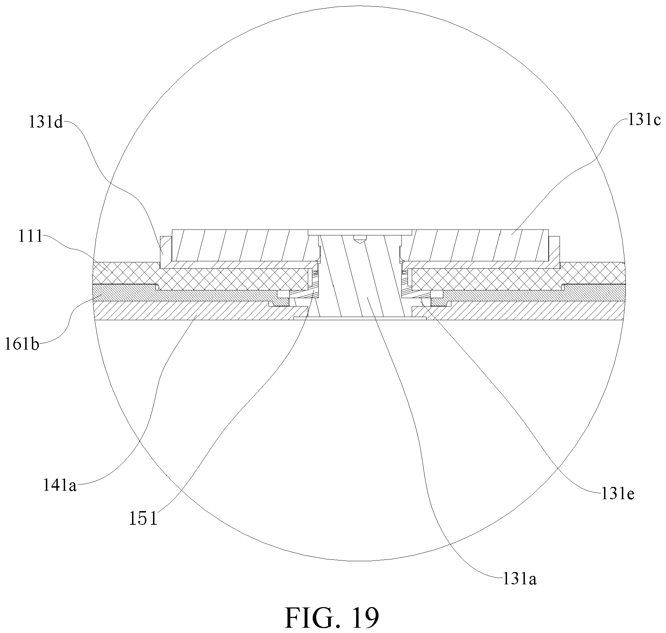

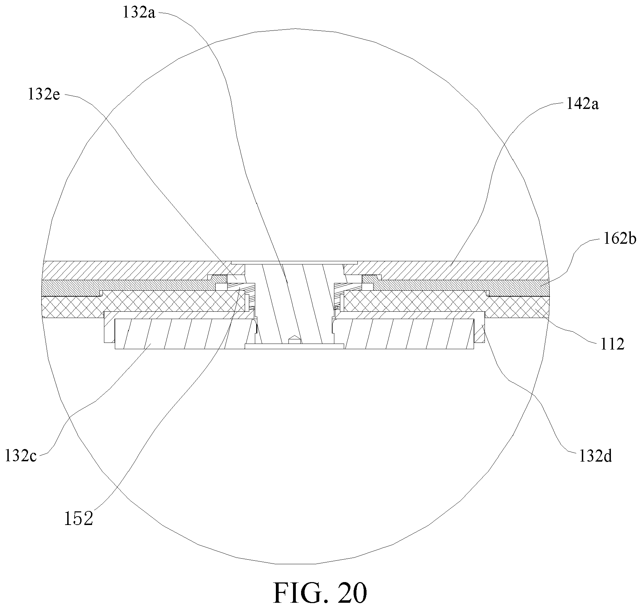

In other embodiments of the present disclosure, as shown in FIG. 19 and FIG. 20, the sealing ring is sleeved on the conductive post, a flange is further arranged on an outer peripheral surface of the conductive post, the flange is connected to the lead-out sheet, and at least a part of the sealing ring is sandwiched between the flange and the inner wall of the battery housing. It should be noted that when the sealing ring is sandwiched between the inner wall of the battery housing and the flange, d2 may be understood as a distance between two opposite surfaces of the sealing ring along the axial direction of the sealing ring. One surface of the two surfaces is a surface of the sealing ring in contact with the inner wall of the battery housing, and the other surface is a surface of the sealing ring in contact with the flange.

In other words, the inner end of the sealing ring does not abut against the lead-out sheet, but abuts against the flange of the conductive post. Specifically, the sealing ring includes a first sealing ring 151 and a second sealing ring 152. The first sealing ring 151 is sleeved on the positive conductive post, a part of the first sealing ring 151 extends into a via 102 of the first plate piece 111, and the other part of the first sealing ring 151 is sandwiched between a positive conductive post flange 131e of the positive conductive post and the first plate piece 111. The second sealing ring 152 is sleeved on the negative conductive post, a part of the second sealing ring 152 extends into a via 102 of the second plate piece 112, and the other part of the second sealing ring 152 is sandwiched between a negative conductive post flange 132e of the negative conductive post and the second plate piece 112.

In some embodiments of the present disclosure, a spacer is arranged between the lead-out sheet and the battery housing 110, the conductive post and the sealing ring both pass through the spacer, an inner end of the conductive post is connected to the lead-out sheet, and an inner end of the sealing ring abuts against the lead-out sheet. The sealing ring is sleeved on an outer peripheral surface of the conductive post. The sealing ring, together with the conductive post, may be inserted into a via that is on the battery housing 110 and through which the conductive post passes. Alternatively, the sealing ring may not enter the via, so that the sealing ring can ensure that the conductive post does not move in a radial direction of the via, to avoid contact with an inner peripheral surface of the via.

Specifically, a part of the inner end of the sealing ring may be matched with a step piece of the spacer, to limit movement of the sealing ring and the conductive post in the radial direction of the via, and the other part of the inner end of the sealing ring may abut against the lead-out sheet.

In some embodiments of the present disclosure, the spacer includes a support piece and an insulating piece connected to the support piece. An inner end and an outer end of the support piece respectively abut against the electrode core 120 and the battery housing 110 of the battery 100. The insulating piece is matched with the lead-out sheet and is arranged between the lead-out sheet and the battery housing 110.

The insulating piece and the lead-out sheet may be approximately in a same structure, for example, each may be configured as an "L" shape. The insulating piece includes an insulating piece vertical plate and an insulating piece horizontal plate that are vertically connected. The lead-out sheet includes a first connection sheet and a second connection sheet that are vertically connected. The insulating piece vertical plate may be arranged between the first connection sheet and one side plate of the housing, and the insulating piece horizontal plate may be arranged between the second connection sheet and one side plate of the housing.

In some embodiments of the present disclosure, the battery housing 110 is configured as an aluminum alloy piece, and a plate thickness of the lower housing and a plate thickness of the sixth plate piece 116 range from 0.2 mm to 0.5 mm. Because hardness of the aluminum alloy piece is low, the plate thickness of the lower housing and the plate thickness of the sixth plate piece 116 need to be set to be larger, to ensure structural strength of the battery housing 110.

In some other embodiments of the present disclosure, the battery housing 110 is configured as a stainless steel piece or a nickel plated steel piece, and the plate thickness of the lower housing and the plate thickness of the sixth plate piece 116 range from 0.05 mm to 0.2 mm. Because hardness of the stainless steel piece or the nickel plated steel piece is high, the plate thickness of the lower housing and the plate thickness of the sixth plate piece 116 may be set to be smaller. This reduces manufacturing costs of the battery housing 110 while ensuring structural strength of the battery housing 110.

It should be noted that the plate thickness of the lower housing is a plate thickness of any one of the first plate piece 111, the second plate piece 112, the third plate piece 113, the fourth plate piece 114, and the fifth plate piece 115.

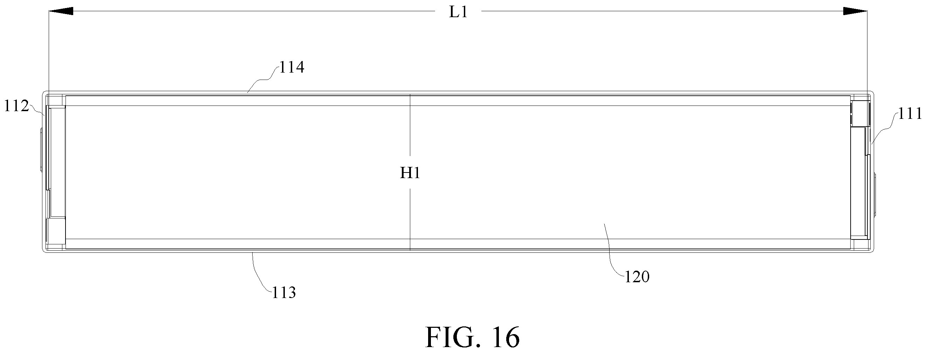

As shown in FIG. 16 to FIG. 18, the positive lead-out sheet 141 and the negative lead-out sheet 142 are arranged in the battery housing 110, and the positive lead-out sheet 141 and the negative lead-out sheet 142 are respectively connected to a positive tab and a negative tab of the electrode core 120. The positive lead-out sheet 141 includes the positive first connection sheet 141a, and the negative lead-out sheet 142 includes the negative first connection sheet 142a. The positive first connection sheet 141a and the negative first connection sheet 142a are distributed at opposite ends of the electrode core 120 in the length direction of the battery housing 110. A distance between the positive first connection sheet 141a and the negative first connection sheet 142a in the length direction of the battery housing 110 is L1, and a size of the battery 100 in the length direction of the battery housing 110 is L. L1 and L meet 0.95≤L1/L≤0.99. It may be understood that the positive first connection sheet 141a has a first surface facing the negative first connection sheet 142a, the negative first connection sheet 142a has a second surface facing the positive first connection sheet 141a, and a distance between the first surface of the positive first connection sheet 141a and the second surface of the negative first connection sheet 142a in the length direction of the battery housing 110 is L1. The battery housing 110 has a first surface and a second surface that are opposite to each other in the length direction, and a distance between the first surface and the second surface of the battery housing 110 in the length direction of the battery housing 110 is L. It should be noted that the length direction of the battery housing 110 is consistent with the length direction of the battery 100.

In some embodiments, the positive lead-out sheet 141 includes the positive second connection sheet 141b and the positive first connection sheet 141a that are connected. The negative lead-out sheet 142 includes the negative second connection sheet 142b and the negative first connection sheet 142a that are connected. Therefore, "L1" in the present disclosure is a distance between an inner surface of the positive first connection sheet 141a and an inner surface of the negative first connection sheet 142a in the length direction of the battery housing 110.

L1 and L meet 0.95≤L1/L≤0.99. It can be ensured that the positive lead-out sheet 141 and the negative lead-out sheet 142 have enough conductive performance, and the positive lead-out sheet 141 and the negative lead-out sheet 142 do not occupy too much internal space of the battery housing 110, and in particular, do not occupy much space of the battery housing 110 in the length direction.

In some embodiments of the present disclosure, a thickness of the positive first connection sheet 141a ranges from 0.6 mm to 2 mm, and a thickness of the negative first connection sheet 142a ranges from 0.6 mm to 2 mm. The thickness of the positive first connection sheet 141a is a size of the positive first connection sheet 141a in the length direction of the battery housing, and the thickness of the negative first connection sheet 142a is a size of the negative first connection sheet 142a in the length direction of the battery housing.

The positive lead-out sheet 141 is configured as an "L" shape and may be an integrally formed member, and the negative lead-out sheet 142 is configured as an "L" shape and may be an integrally formed member. The thickness of the positive lead-out sheet 141 may be a thickness of the positive first connection sheet 141a, and the thickness of the negative lead-out sheet 142 may be a thickness of the negative first connection sheet 142a. This is because the thickness of the positive first connection sheet 141a and the thickness of the negative first connection sheet 142a affect a degree of space occupied by the positive lead-out sheet 141 and the negative lead-out sheet 142 in the length direction of the battery housing 110. Therefore, the thickness of the positive lead-out sheet 141 is limited to 0.6 mm to 2 mm, and the thickness of the negative lead-out sheet 142 is limited to 0.6 mm to 2 mm. The positive lead-out sheet 141 and the negative lead-out sheet 142 may not occupy too much internal space of the battery housing 110, and in particular, do not occupy much space of the battery housing 110 in the length direction. Therefore, a capacity of the battery is improved without changing a size of the battery. The positive conductive post 131 is arranged on the first plate piece 111, and the negative conductive post 132 is arranged on the second plate piece 112. However, the positive conductive post 131 does not directly contact the first plate piece 111, and the negative conductive post 132 does not directly contact the second plate piece 112.

The positive first connection sheet 141a is parallel to the first plate piece 111 and is connected to the positive conductive post 131, the negative first connection sheet 142a is parallel to the second plate piece 112 and is connected to the negative conductive post 132, and a distance between the inner surface of the positive first connection sheet 141a and an inner surface of the negative lead-out sheet in the length direction of the battery housing 110 is "L1".

In some embodiments, the electrode core 120 has a first end surface and a second end surface opposite to each other. A positive tab of the electrode core 120 is led out from the first end surface. A negative tab of the electrode core 120 is led out from the second end surface. A distance between the first end surface of the electrode core 120 and the positive first connection sheet 141a in the length direction of the battery housing 110 ranges from 2 mm to 12 mm, and a distance between the second end surface of the electrode core 120 and the negative first connection sheet 142a in the length direction of the battery housing 110 ranges from 2 mm to 12 mm.

The battery housing 110 further includes the third plate piece 113 and the fourth plate piece 114 that are opposite to each other in a width direction. A distance between an inner surface of the third plate piece 113 and an inner surface of the fourth plate piece 114 in the width direction of the battery housing 110 is H1, and a size of the battery 100 in the width direction of the battery housing 110 is H. H1 and H meet 0.92≤H1/H≤0.98. This ensures that plate thicknesses of the third plate piece 113 and the fourth plate piece 114 can provide enough strength for the battery housing 110, and a capacity of the battery 100 is not affected by reduced space in the battery housing 110 because the plate thicknesses of the third plate piece 113 and the fourth plate piece 114 are large. It should be noted that the width direction of the battery housing 110 is consistent with the width direction of the battery 100.

In some embodiments of the present disclosure, the battery housing 110 further includes the fifth plate piece 115 and the sixth plate piece 116 that are opposite to each other in a thickness direction. A distance between an inner surface of the fifth plate piece 115 and an inner surface of the sixth plate piece 116 in the thickness direction of the battery housing 110 is D1, and a size of the battery 100 in the thickness direction of the battery housing 110 is D. L>H>D, and D1 and D meet 0.93≤D1/D≤0.99. Therefore, thicknesses of the fifth plate piece 115 and the sixth plate piece 116 are not excessively large, so that the fifth plate piece 115 and the sixth plate piece 116 do not excessively occupy internal space of the battery housing 110 when a volume of the battery housing 110 is fixed. In addition, the fifth plate piece 115 and the sixth plate piece 116 have a certain thickness, and this may further ensure that the battery housing 110 has sufficient structural strength. It should be noted that the thickness direction of the battery housing 110 is consistent with the thickness direction of the battery 100.

The positive second connection sheet 141b is arranged on the positive first connection sheet 141a and extends toward the inside of the battery housing 110, the negative second connection sheet 142b is connected to the negative first connection sheet 142a and extends toward the inside of the battery housing 110, and both the positive second connection sheet 141b and the negative second connection sheet 142b are parallel to the fifth plate piece 115 and the sixth plate piece 116. Specifically, both the positive second connection sheet 141b and the negative second connection sheet 142b are bonded to an inner surface of the fifth plate piece 115.

The battery in the embodiments of the present disclosure includes the lower housing and an upper housing. The upper housing and the lower housing may be connected by welding. After the lower housing and the upper housing are fastened together, both the upper housing and the lower housing limit accommodation space that accommodates the electrode core 120.

According to some embodiments of the present disclosure, the lower housing includes: the first plate piece 111 and the second plate piece 112, the first plate piece 111 and the second plate piece 112 being opposite to each other in the length direction of the battery 100; the third plate piece 113 and the fourth plate piece 114, the third plate piece 113 and the fourth plate piece 114 being opposite to each other in the width direction of the battery 100, the third plate piece 113 being separately connected to one end on a same side of the first plate piece 111 and the second plate piece 112 in the width direction of the battery 100, and the fourth plate piece 114 being separately connected to the other end on the same side of the first plate piece 111 and the second plate piece 112 in the width direction of the battery 100; and the fifth plate piece 115, an outer peripheral edge of the fifth plate piece 115 being separately connected to one end on a same side of the first plate piece 111, the second plate piece 112, the third plate piece 113, and the fourth plate piece 114 in the thickness direction of the battery 100. The first plate piece 111, the second plate piece 112, the third plate piece 113, and the fourth plate piece 114 are configured as peripheral side walls of the lower housing. Therefore, an opening of the lower housing is very large, so that the electrode core 120 can be conveniently installed inside the battery housing 110, to improve installation efficiency of the battery 100.

Further, the first plate piece 111, the second plate piece 112, the third plate piece 113, the fourth plate piece 114, and the fifth plate piece 115 are an integrally formed member. The lower housing may be integrally formed through sheet metal stamping. Therefore, molding efficiency of the lower housing is greatly increased, and structural strength of the lower housing is also enhanced. The upper housing is configured as the sixth plate piece 116, and the sixth plate piece 116 and the fifth plate piece 115 are directly opposite to each other in the thickness direction of the battery 100.

The battery according to the present disclosure includes the battery housing 110, the electrode core 120, the lead-out piece, and the spacer.

As shown in FIG. 1 to FIG. 15, there is an accommodation space in the battery housing 110, the electrode core 120 and the lead-out sheet are arranged in the battery housing 110, and the lead-out sheet is connected to a tab of the electrode core 120. A part of the spacer is sandwiched between the lead-out sheet and the battery housing 110, and the other part of the spacer is sandwiched between an end of the electrode core 120 and the battery housing 110.

In other words, the spacer in the present disclosure may not only separate the lead-out sheet from the battery housing 110, to avoid a short circuit phenomenon caused by contact between the lead-out sheet and the battery housing 110, but also abut against two ends of the electrode core 120, to avoid movement of the electrode core 120 in a direction of the battery housing 110 and improve stability of the electrode core. Therefore, it is ensured that a tab arranged on the electrode core 120 does not move, and connection stability between the tab and the lead-out sheet is improved.

In some embodiments of the present disclosure, the spacer includes a support piece and an insulating piece connected to the support piece, the support piece is sandwiched between an end of the electrode core 120 and the battery housing 110, and the insulating piece is matched with the lead-out sheet, and is sandwiched between the lead-out sheet and the battery housing 110. In fact, not only the insulating piece is an insulating piece, but also the support piece is an insulating member. The support piece and the insulating piece each may be an integrally formed member.

Both ends of the support piece may abut against an end of the electrode core 120 and an inner wall of the battery housing 110, and the insulating piece may be matched with the lead-out sheet. In addition, the insulating piece is further spaced between the lead-out sheet and the battery housing 110, to avoid a leakage phenomenon caused by direct contact between the lead-out sheet and the battery housing 110.

Further, the lead-out sheet may be configured as an "L" shape and includes a first connection sheet and a second connection sheet, the first connection sheet is connected to the second connection sheet, the first connection sheet is parallel to a side plate of the battery housing 110 in the length direction, and the second connection sheet is parallel to a side plate of the battery housing 110 in the thickness direction.

The insulating piece is also configured as an "L" shape and includes an insulating piece vertical plate and an insulating piece horizontal plate. The insulating piece vertical plate is connected to the insulating piece horizontal plate, the insulating piece vertical plate is arranged between the first connection sheet and a side plate of the battery housing 110 in the length direction, and the insulating piece horizontal plate is arranged between the second connection sheet and a side plate of the battery housing 110 in the thickness direction.

A size of the support piece in the length direction of the battery housing 110 is greater than a size of the insulating piece vertical plate in the length direction of the battery housing 110, and the support piece protrudes towards a center of the battery housing 110 relative to the insulating piece vertical plate, so that the support piece can abut against an end of the electrode core 120, and an end of the electrode core 120 does not abut against the insulating piece vertical plate.

It may be understood that the L-shaped lead-out sheet may be arranged inside the L-shaped insulating piece, so that the insulating piece can package a whole of the lead-out sheet, to avoid direct contact with the battery housing 110.

Further, an outer surface of the support piece is flush with an outer surface of the insulating piece vertical plate, and an inner surface of the support piece is flush with an inner end of the insulating piece horizontal plate. In other words, a size of the support piece that protrudes toward the inside relative to the insulating piece vertical plate is a size of the insulating piece horizontal plate in the length direction. When the second connection sheet on the insulating piece horizontal plate is stacked with and connected to a tab of the electrode core 120, the support piece abuts against an end of the electrode core 120 in the length direction.

In some embodiments of the present disclosure, an electrolyte immersion through hole 101 and a via through which a conductive post passes are provided on the insulating piece vertical plate. The conductive post passes through the via on the insulating piece and is connected to the first connection sheet. The electrolyte immersion through hole 101 provided on the insulating piece may facilitate injection of electrolytes into the battery housing 110. In addition, gas inside the battery housing 110 may also be discharged out of the electrolyte immersion through hole 101. It may be understood that the electrolyte immersion through hole 101 is directly opposite to an explosion proof valve and a liquid injection hole of the battery 100 on the battery housing 110 in the length direction of the battery housing 110.

In some embodiments of the present disclosure, the battery housing 110 includes the first plate piece 111 and the second plate piece 112 that are opposite to each other in the length direction of the battery housing 110, the third plate piece 113 and the fourth plate piece 114 that are opposite to each other in the width direction of the battery housing 110, and the fifth plate piece 115 and the sixth plate piece 116 that are opposite to each other in the thickness direction of the battery housing 110. The first plate piece 111, the second plate piece 112, the third plate piece 113, the fourth plate piece 114, and the fifth plate piece 115 are configured as a lower housing with one end open, and the sixth plate piece 116 is fastened to the lower housing to block the open end.

The lead-out sheets include the positive lead-out sheet 141 and the negative lead-out sheet 142. The positive lead-out sheet 141 is separately connected to the positive conductive post 131 and a positive tab of the electrode core 120, and the negative lead-out sheet 142 is separately connected to the negative conductive post 132 and a negative tab of the electrode core 120.

A spacer includes the first insulating spacer 161 and the second insulating spacer 162. A spacer vertical plate of the first insulating spacer 161 is arranged between the first plate piece 111 and a first connection sheet of the positive lead-out sheet 141, a spacer horizontal plate of the first insulating spacer 161 is arranged between the fifth plate piece 115 and a second connection sheet of the positive lead-out sheet 141, a spacer vertical plate of the second insulating spacer 162 is arranged between the second plate piece 112 and a first connection sheet of the negative lead-out sheet 142, and a spacer horizontal plate of the second insulating spacer 162 is arranged between the fifth plate piece 115 and a second connection sheet of the negative lead-out sheet 142.

The electrode core 120 is directly arranged in the lower housing, and then the tab is welded to the lead-out sheet. A welding method may be laser welding, resistance welding, or another welding method. The lead-out sheet is designed in an L shape, to facilitate welding with the tab. The tab may be naturally straightened and stacked with the lead-out sheet after the electrode core 120 is integrally assembled into the housing. Then, the tab may be welded together with the lead-out sheet, to avoid a risk of positive or negative electrode contact due to a bent tab, reduce a size of a tab, increase utilization of a metal current collector, improve a process yield, and reduce product costs.

After the tab of the electrode core 120 is welded to the lead-out sheet of the lower housing, the upper housing (the sixth plate piece 116) is assembled. After the upper housing and the lower housing are assembled, the upper housing and the lower housing are sealed and connected through laser welding or crimping, so that the upper housing and the lower housing form a sealing body.

After the battery housing 110 is assembled, liquid injection may be performed through a liquid injection hole. After the liquid injection is completed, the liquid injection hole needs to be sealed, and a sealing method is metal sheet welding or rubber plug sealing. An explosion proof valve of the battery 100 is arranged on the first plate piece 111 or the second plate piece 112, and one or more explosion proof valves may be arranged on the first plate piece 111 or the second plate piece 112.

The explosion proof valve is formed by laser scribing or direct stamping on a side plate on the battery housing 110. Alternatively, holes of a shape and size the same as the explosion proof valve may be stamped on the battery housing 110, and then the explosion proof valve is welded to the battery housing 110.

According to some embodiments of the present disclosure, the lead-out sheet is configured as an "L" shape. The second connection sheet is connected to one side of the first connection sheet and extends toward the inside of the housing, and the second connection sheet that extends toward the inside of the housing may be welded and fixed with a plurality of tabs, so that the plurality of tabs are not bent too much, and the tabs are flatter during welding and after welding.

In other embodiments of the present disclosure, the lead-out sheet is configured as a "T" shape, and the second connection sheet is connected to a middle area of the first connection sheet and extends toward the inside of the battery housing 110. Because the "T" shaped lead-out sheet still has a second connection sheet extending toward the inside of the housing, the tabs can still be welded to the second connection sheet evenly, and the tabs are not bent too much, to greatly improve connection stability between the tabs and the lead-out sheet. One part of the plurality of tabs may be welded to one side surface of the second connection sheet in the thickness direction, and the other part of the plurality of tabs may be welded to the other side surface of the second connection sheet in the thickness direction.

The first connection sheet may be parallel to the first plate piece 111 and the second plate piece 112, and the conductive post may be sleeved on the first plate piece 111 or the second plate piece 112 and connected to the first connection sheet.

The conductive posts include the positive conductive post 131 and the negative conductive post 132. The lead-out sheets include the positive lead-out sheet 141 and the negative lead-out sheet 142. The positive conductive post 131 passes through the first plate piece 111 and is connected to the first connection sheet of the positive lead-out sheet 141, and the negative conductive post 132 passes through the second plate piece 112 and is connected to the first connection sheet of the negative lead-out sheet 142. In addition, the second connection sheet is parallel to the fifth plate piece 115 or the sixth plate piece 116.

It should be noted that the conductive post in the battery 100 in the present disclosure includes the positive conductive post 131 and the negative conductive post 132, the lead-out sheets include the positive lead-out sheet 141 and the negative lead-out sheet 142, and tabs include a positive tab and a negative tab. The positive lead-out sheet 141 includes the positive first connection sheet 141a and the positive second connection sheet 141b, and the negative lead-out sheet 142 includes the negative first connection sheet 142a and the negative second connection sheet 142b.

The spacer is arranged between the lead-out sheet and the battery housing 110, and the conductive post passes through the spacer and is connected to the lead-out sheet. The spacer may avoid direct contact between the lead-out sheet and the battery housing 110, to avoid a risk that the battery housing 110 is electrically charged, and improve security performance of the battery 100.

In some embodiments of the present disclosure, the spacer includes a support piece and an insulating piece connected to the support piece, the support piece is sandwiched between an end of the electrode core 120 and the battery housing 110, and the insulating piece is matched with the lead-out sheet, and is sandwiched between the lead-out sheet and the battery housing 110. In fact, not only the insulating piece is an insulating piece, but also the support piece is an insulating member. The support piece and the insulating piece each may be an integrally formed member.

The insulating piece is also configured as an "L" shape and includes an insulating piece vertical plate and an insulating piece horizontal plate. The insulating piece vertical plate is connected to the insulating piece horizontal plate, the insulating piece vertical plate is arranged between the first connection sheet and a side plate of the battery housing 110 in the length direction, and the insulating piece horizontal plate is arranged between the second connection sheet and a side plate of the battery housing 110 in the thickness direction.

The following briefly describes a battery pack according to the embodiments of the present disclosure.

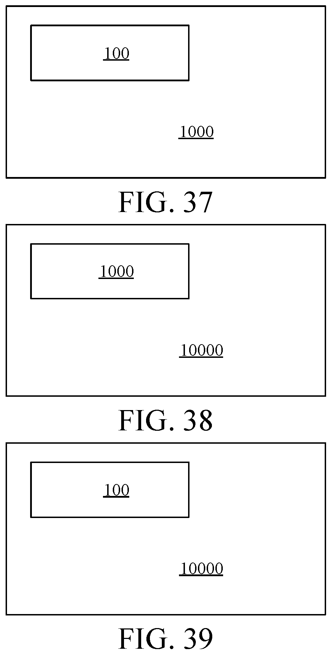

As shown in FIG. 37, the battery pack 1000 according to the embodiments of the present disclosure includes the foregoing battery 100. Because the battery 100 is arranged in the battery pack 1000 according to the embodiments of the present disclosure, security performance of the battery pack 1000 is stronger, and power of the battery pack 1000 is further increased.

The following briefly describes a vehicle 10000 according to the embodiments of the present disclosure.

As shown in FIG. 38, the vehicle 10000 according to the embodiments of the present disclosure includes the foregoing battery pack 1000. Because the foregoing battery pack 1000 is arranged on the vehicle 10000 according to the embodiments of the present disclosure, a driving range of the vehicle 10000 is significantly improved, and electrical security performance of the vehicle 10000 is also significantly improved.

In addition, as described in FIG. 39, in another embodiment of the present disclosure, the vehicle 10000 includes the foregoing battery 100. The battery 100 in the foregoing embodiment is set, a driving range of the vehicle 10000 can be improved, and electrical security performance of the vehicle 10000 is also significantly improved.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, example descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art may understand that various changes, modifications, replacements, and variations may be made to the embodiments without departing from the principles and objectives of the present disclosure, and the scope of the present disclosure is defined by the appended claims and their equivalents.

## Claims

1. Abattery(100), comprising:
a battery housing (110); and
an electrode core (120), lead-out sheets, and conductive posts, the electrode core (120) and the lead-out sheets being all arranged in the battery housing (110), the lead-out sheets being connected to the electrode core (120), and the conductive posts passing through the battery housing (110), so that the conductive posts are connected to the lead-out sheets; wherein a relationship between a cross-sectional area s_{lead} of the lead-out sheets and a capacity C of the battery (100) is C/s_{lead}≤15, a unit of s_{lead} is mm², and a unit of C is Ah.

2. The battery (100) according to claim 1, wherein a relationship between the cross-sectional area s_{lead} of the lead-out sheets and the capacity C of the battery (100) is 2≤C/s_{lead}≤15.

3. The battery (100) according to claim 1 or 2, wherein the lead-out sheets comprise a positive lead-out sheet (141) and a negative lead-out sheet (142), and the conductive posts comprise a positive conductive post (131) and a negative conductive post (132), wherein the positive lead-out sheet (141) passes through the battery housing (110) and is connected to the positive conductive post (131), and the negative lead-out sheet (142) passes through the battery housing (110) and is connected to the negative conductive post (132); and
a relationship between a cross-sectional area s_{positive lead} of the positive lead-out sheet (141) and the capacity C of the battery (100) is 5≤C/s_{positive lead}≤12, a relationship between a cross-sectional area s_{negative lead} of the negative lead-out sheet (142) and the capacity C of the battery (100) is 6≤C/s_{negative lead}≤15, a cross section of the positive lead-out sheet (141) and a cross section of the negative lead-out sheet (142) each are a surface orthogonal to a current flow direction, units of s_{positive lead} and s_{negative lead} are mm², and a unit of C is Ah.

4. The battery (100) according to claim 3, wherein the cross-sectional area of the positive lead-out sheet (141) ranges from 14 mm² to 150 mm², the cross-sectional area of the negative lead-out sheet (142) ranges from 10 mm² to 130 mm², and the capacity C of the battery (100) ranges from 30 Ah to 400 Ah.

5. The battery (100) according to claim 3 or 4, wherein the positive lead-out sheet (141) is an aluminum sheet, and the negative lead-out sheet (142) is a copper sheet.

6. The battery (100) according to any one of claims 3 to 5, wherein the positive lead-out sheet (141) and the negative lead-out sheet (142) each comprise: a first connection sheet and a second connection sheet that are connected, wherein the second connection sheet of the positive lead-out sheet (141) is connected to a positive tab of the electrode core (120), the first connection sheet of the positive lead-out sheet (141) is connected to the positive conductive post (131), the second connection sheet of the negative lead-out sheet (142) is connected to a negative tab of the electrode core (120), and the first connection sheet of the negative lead-out sheet (142) is connected to the negative conductive post (132).

7. The battery (100) according to claim 6, wherein a size of the first connection sheet in a length direction of the battery (100) ranges from 0.8 mm to 2 mm.

8. The battery (100) according to claim 7, wherein a size of the first connection sheet in the length direction of the battery (100) ranges from 0.6 mm to 2 mm.

9. The battery (100) according to any one of claims 6 to 8, wherein the battery housing (110) comprises: a first plate piece (111) and a second plate piece (112) that are opposite to each other in the length direction of the battery (100), the first connection sheet of the positive lead-out sheet (141) and the first connection sheet of the negative lead-out sheet (142) each being parallel to the first plate piece (111) and the second plate piece (112).

10. The battery (100) according to claim 9, wherein the battery housing (110) further comprises: a third plate piece (113) and a fourth plate piece (114) that are opposite to each other in a width direction of the battery (100), and a fifth plate piece (115) and a sixth plate piece (116) that are opposite to each other in a thickness direction of the battery (100), the second connection sheet of the positive lead-out sheet (141) and the second connection sheet of the negative lead-out sheet (142) each being parallel to the fifth plate piece (115) and the sixth plate piece (116).

11. The battery (100) according to claim 10, wherein the first plate piece (111), the second plate piece (112), the third plate piece (113), the fourth plate piece (114), and the fifth plate piece (115) are configured as a lower housing with one side open, and the sixth plate piece (116) is fixedly connected to the lower housing to block an open end of the lower housing.

12. The battery (100) according to any one of claims 9 to 11, further comprising: a first insulating spacer (161) arranged in the battery housing (110), at least a part of the first insulating spacer (161) being located between the positive lead-out sheet (141) and the first plate piece (111), and the positive conductive post (131) passing through the first insulating spacer (161) and being connected to the positive lead-out sheet (141).

13. The battery (100) according to any one of claims 9 to 12, further comprising: a second insulating spacer (162) arranged in the battery housing (110), at least a part of the second insulating spacer (162) being located between the negative lead-out sheet (142) and the second plate piece (112), and the negative conductive post (132) passing through the second insulating spacer (162) and being connected to the negative lead-out sheet (142).

14. The battery (100) according to any one of claims 3 to 13, wherein a relationship between a cross-sectional area s1 of the positive conductive post (131) and the capacity C of the battery (100) is 6/5≤C/s1≤16/3, and a relationship between a cross-sectional area s2 of the negative conductive post (132) and the capacity C of the battery (100) is 6/5≤C/s2≤8, wherein units of s1 and s2 are both mm².

15. The battery (100) according to claim 14, wherein the cross-sectional area s1 of the positive conductive post (131) and the cross-sectional area s2 of the negative conductive post (132) range from 12 mm² to 315 mm², and the capacity C of the battery (100) ranges from 30 Ah to 400 Ah.

16. The battery (100) according to claim 3, wherein the positive conductive post (131) is an aluminum post, and the negative conductive post (132) is a copper post.

17. A battery pack (1000), comprising: the battery (100) according to any of claims 1 to 16.

18. A vehicle (10000), comprising: the battery (100) according to any of claims 1 to 16 or the battery pack (1000) according to claim 17.
